# EUROPÄISCHE PATENTSCHRIFT

(11) **EP 3 362 761 B1**
(45) Veröffentlichungstag und Bekanntmachung des Hinweises auf die Patenterteilung: **15.05.2019**
(21) Anmeldenummer: 17705132.3
(22) Anmeldetag: 15.02.2017
(51) Int. Cl.: F41H 5/04

(54) **BALLISTISCHES SCHUTZMATERIAL UND SEINE VERWENDUNG**
BALLISTIC PROTECTION MATERIAL AND USE THEREOF
MATÉRIAU DE PROTECTION BALISTIQUE ET SON UTILISATION

(30) Priorität: 17.02.2016 DE 102016001799; 14.06.2016 DE 102016110896
(43) Veröffentlichungstag der Anmeldung: 22.08.2018
(73) Patentinhaber: Blücher GmbH, 40699 Erkrath (DE)
(72) Erfinder: VON BLÜCHER, Hasso, 40699 Erkrath (DE)
(74) Vertreter: Von Rohr Patentanwälte Partnerschaft mbB
(86) Internationale Anmeldenummer: PCT/EP2017/053355
(87) Internationale Veröffentlichungsnummer: WO 2017/140707

(56) Entgegenhaltungen:
- EP-A1- 0 499 812
- EP-A1- 1 828 706
- EP-A1- 2 749 662
- DE-A1- 3 938 741
- US-A- 5 866 839
- US-A1- 2010 275 765
- US-B1- 8 096 223

## Beschreibung

Die vorliegende Erfindung betrifft das technische Gebiet von Schutzbekleidungen, welche insbesondere für den militärischen, aber gegebenenfalls auch für den zivilen, Einsatz konzipiert sind und welche im Speziellen eine Schutzfunktion gegenüber ballistischen Wirkkörpern (Wurfkörpern), insbesondere bewehrungsdurchdringenden und/oder panzerbrechenden Geschossen, Schubkörpern oder Eindringkörpern, aufweisen.

Insbesondere wird ein Schutzmaterial, vorzugsweise ein ballistisches Schutzmaterial mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, beschrieben.

Gleichermaßen wird ein Schutzelement, vorzugsweise ein ballistisches Schutzelement, insbesondere mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, vorzugsweise in Form einer ballistischen Schutzplatte, insbesondere eines ballistischen Panzerungsbauteils, besonders bevorzugt einer ballistischen und/oder beschusshemmenden Verbundpanzerplatte, beschrieben.

Die vorliegende Erfindung betrifft eine ballistische Schutzoberbekleidung, insbesondere in Form einer ballistischen und/oder beschusshemmenden Schutzweste oder -jacke, bevorzugt mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern.

Gleichermaßen betrifft die vorliegende Erfindung eine Schutzbekleidungseinheit, vorzugsweise eine ballistische Schutzbekleidungseinheit, bevorzugt mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, mit Oberbekleidung und/oder Unterbekleidung sowie gegebenenfalls mit separatem Kopf- und/oder Gesichtsschutz, Halsschutz, Schulterschutz, Armschutz, Handschutz, Rumpfschutz, Torsoschutz, Genital- und/oder Analschutz und/oder Beinschutz.

Darüber hinaus wird auch die Verwendung eines Schutzmaterials und/oder mindestens eines Schutzelements zur Herstellung von Schutzbekleidungen aller Art, vorzugsweise mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, beschrieben.

Gleichermaßen wird die Verwendung mindestens eines Schutzmaterials und/oder mindestens eines Schutzelements, vorzugsweise eines plattenförmigen ballistischen Schutzelements, insbesondere ballistischen Panzerungsbauteils, besonders bevorzugt einer ballistischen und/oder beschusshemmenden Verbundpanzerplatte, zur Ausrüstung von Bekleidung mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, beschrieben.

Des Weiteren wird die Verwendung mindestens eines Schutzmaterials und/oder mindestens eines Schutzelements, vorzugsweise eines plattenförmigen ballistischen Schutzelements, insbesondere ballistischen Panzerungsbauteils, besonders bevorzugt einer ballistischen und/oder beschusshemmenden Verbundpanzerplatte, zur Herstellung von Fahrzeugen aller Art, insbesondere Pkw, Lkw, Nutzfahrzeugen, Landfahrzeugen oder dergleichen, vorzugsweise mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, beschrieben.

Darüber hinaus wird die Verwendung mindestens eines Schutzmaterials und/oder mindestens eines Schutzelements, vorzugsweise eines plattenförmigen ballistischen Schutzelements, insbesondere ballistischen Panzerungsbauteils, besonders bevorzugt einer ballistischen und/oder beschusshemmenden Verbundpanzerplatte, zur Ausrüstung von Fahrzeugen aller Art, insbesondere Pkw, Lkw, Nutzfahrzeugen, Landfahrzeugen oder dergleichen, mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, beschrieben.

Gleichermaßen wird die Verwendung mindestens eines Schutzmaterials und/oder mindestens eines Schutzelements, vorzugsweise eines plattenförmigen ballistischen Schutzelements, insbesondere ballistischen Panzerungsbauteils, besonders bevorzugt einer ballistischen und/oder beschusshemmenden Verbundpanzerplatte, zur Herstellung von Objekten oder Gebäuden aller Art, vorzugsweise mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, beschrieben.

Des Weiteren wird die Verwendung mindestens eines Schutzmaterials und/oder mindestens eines Schutzelements, vorzugsweise eines plattenförmigen ballistischen Schutzelements, insbesondere ballistischen Panzerungsbauteils, besonders bevorzugt einer ballistischen und/oder beschusshemmenden Verbundpanzerplatte, zur Ausrüstung von Objekten oder Gebäuden aller Art mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, beschrieben.

Ebenfalls werden Fahrzeuge aller Art, insbesondere Pkw, Lkw, Nutzfahrzeuge, Landfahrzeuge oder dergleichen, bevorzugt mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, beschrieben.

Ebenso werden Objekte oder Gebäude, bevorzugt mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, beschrieben.

Schließlich wird ein Verfahren zur Bereitstellung eines Schutzes, vorzugsweise von Personen, gegenüber ballistischen Wirkkörpern (Wurfkörpern), insbesondere gegenüber bewehrungsdurchdringenden und/oder panzerbrechenden Geschossen, Schubkörpern oder Eindringkörpern, beschrieben.

Im militärischen Bereich sowie im Bereich der terroristischen Gefahrenabwehr eingesetzte oder sich befindende Personen, wie Soldaten militärischer Verbände, Grenzschützer, Polizisten, Sicherheitspersonal, aber auch zivile Personen, sind im Rahmen ihres Einsatzes, wie militärischen Kampf- oder Sicherungseinsätzen, antiterroristischen Einsätzen bzw. Einsätzen zur insbesondere militärischen oder terroristischen Gefahrenabwehr, aber auch gezwungenermaßen aufgrund ziviler Umstände, häufig mit einer akuten oder zumindest latenten Gefahr einer direkten körperlichen Gewalteinwirkung konfrontiert, wie sie neben dem Einsatz von Sprengvorrichtungen oder Stichwaffen insbesondere auch durch eine gezielte oder willkürliche Einwirkung ballistischer Wurfkörper, insbesondere Geschosse, durch Schussvorrichtungen hervorgerufen wird.

In diesem Zusammenhang sind insbesondere Feuerwaffen als tragbare Schussvorrichtungen zu nennen, bei denen die ballistischen Wirkkörper, insbesondere Geschosse, durch eine explosionsartige Energiefreisetzung auf Hochgeschwindigkeit beschleunigt werden und mit hoher kinetischer Energie auf eine betroffene Person auftreffen, einhergehend mit zumeist lebensbedrohlichen, mitunter unmittelbar tödlichen bzw. letalen Verletzungen der betroffenen Person. In diesem Zusammenhang haben sich Feuerwaffen im Rahmen aggressiver oder defensiver Kampfhandlungen, insbesondere zur Realisierung einer gezielten Gewalteinwirkung ohne unmittelbaren Körperkontakt zum Gegner, zu einem subtilen Werkzeug mit einem hohen Verletzungs- bzw. Gefährdungspotential entwickelt.

Im Allgemeinen besteht die Funktionsweise der voranstehend genannten Feuerwaffen und ihnen gleichgestellten Schussvorrichtungen darin, dass die ballistischen Wirkkörper durch heiße Gase unter Hochgeschwindigkeit aus einem Lauf der Feuerwaffe getrieben werden.

Insbesondere besteht die Funktionsweise von Feuerwaffen darin, dass chemische Treibmittel zur Beschleunigung des ballistischen Wirkkörpers als Energieträger bei ihrer Aktivierung ein großes Volumen anstreben, einhergehend mit der Erzeugung einer explosionsartigen, auf den ballistischen Wirkkörper einwirkenden Gasdruckerhöhung, sodass der ballistische Wirkkörper unter Hochgeschwindigkeit durch den Lauf der Feuerwaffe getrieben wird und sich anschließend entlang einer ballistischen Flugbahn in Richtung eines, gegebenenfalls zuvor identifizierten, Ziels bewegt.

Aufgrund der Funktionsweise von Feuerwaffen mit der explosionsartigen Umwandlung der im Treibmittel gespeicherten chemischen Energie in eine kinetische Energie des Wirkkörpers weisen die durch Feuerwaffen abgegebenen ballistischen Wirkkörper bzw. Geschosse eine enorme Durchschlagskraft bzw. Auftreffenergie auf, einhergehend mit einer hohen Penetration bzw. Eindringtiefe - mitunter einem vollständigen Durchdringen - zumeist physiologisch wichtiger Körperstrukturen, wie z. B. Blutgefäßen, Nervenbahnen, Organen oder dergleichen. Daraus resultieren nahezu ausschließlich schwerwiegende, oftmals lebensbedrohliche, mitunter unmittelbar tödliche bzw. letale Verletzungen der betroffenen Person.

Somit ist festzustellen, dass im Stand der Technik ein hoher Bedarf an insbesondere tragbaren Schutzvorrichtungen mit einer effektiven ballistischen Schutzfunktion gegenüber ballistischen Wirkkörpern, insbesondere aus Feuerwaffen abgegebenen Geschossen, besteht, wobei derartige Schutzvorrichtungen auch einen akzeptablen Tragekomfort, insbesondere unter Realisierung eines geringen Gewichts bei gleichzeitig hoher Beweglichkeit bzw. Behaglichkeit, aufweisen sollen.

Vor diesem Hintergrund sind im Stand der Technik unterschiedliche Ansätze verfolgt worden, auf deren Basis betroffene Personen vor der tödlichen Einwirkung von ballistischen Wirkkörpern durch Schusswaffen, Stichwaffen oder Sprengvorrichtungen geschützt werden sollen. Jedoch führen die bekannten Ansätze nicht immer zum gewünschten Erfolg.

So besteht ein technischer Ansatz zur Realisierung einer ballistischen Schutzfunktion darin, weichballistische Schutzsysteme in Form mehrschichtiger Netz- oder Folienstrukturen aus einem reißfesten Gewebe, zumeist auf Basis von Aramidfasern, einzusetzen. Dabei wird die kinetische Energie des auftreffenden Geschosses teilweise absorbiert, indem das Geschoss die einzelnen Schichten in eine Bewegung in Richtung des Einschusses versetzt und zusätzlich eine Dehnung der einzelnen Fasern bewirkt. Das Geschoss selbst verbleibt in der Netzstruktur und führt somit zu einer Verformung des weichballistischen Schutzsystems, zumeist in Form einer Ausbuchtung, die in Richtung des Körpers des Trägers ausgebildet ist. Nachteilig bei diesem Ansatz ist jedoch, dass die Netz- bzw. Folienstrukturen auf Basis eines reißfesten Gewebes keinen ballistischen Schutz gegenüber bewehrungsdurchdringenden und/oder panzerbrechenden ballistischen Wirkkörpern bieten.

Ein weiterer technischer Ansatz zur Realisierung einer ballistischen Schutzfunktion besteht darin, zur Erhöhung der Durchschusshemmung alternativ oder zusätzlich zu den vorgenannten weichballistischen Schutzsystemen hartballistische Schutzsysteme auf Basis plattenförmiger Schutzelemente aus Metall, Keramik oder Hochleistungskunststoffen einzusetzen. Dabei wird ein Großteil der kinetischen Energie des auftreffenden Wirkkörpers auf dem plattenförmigen Schutzelement verteilt. Zwar lässt sich durch den Einsatz bzw. die Verstärkung mittels hartballistischer Schutzsysteme eine ballistische Schutzfunktion gegenüber bewehrungsdurchdringenden und/oder panzerbrechenden Wirkkörpern erzielen. Jedoch sind derartige Schutzsysteme grundsätzlich mit dem Nachteil verbunden, dass sie aufgrund der plattenförmigen Ausbildung ein hohes Gewicht aufweisen und zudem unflexibel bzw. steif ausgebildet sind, einhergehend mit einem geringen Tragekomfort und folglich einer langfristig reduzierten Trageakzeptanz.

Insbesondere ist diesbezüglich herauszustellen, dass gerade bei langen Trage- bzw. Einsatzzeiten in oftmals unwegsamen Umgebungen eine angemessene Beweglichkeit und/oder Behaglichkeit bei einem gleichzeitig akzeptablen Tragegewicht ein unabdingbares bzw. zwingend erforderliches Anforderungskriterium an tragbare Schutzvorrichtungen darstellt. Des Weiteren ist, insbesondere unter Einsatzbedingungen, eine individuelle und/oder flexible und/oder situative Anpassung der Schutzvorrichtungen an die Geometrie bzw. Form unterschiedlicher zu schützender Bereiche, insbesondere Körperbereiche, wünschenswert.

Zudem sind die im Stand der Technik realisierten Schutzsysteme oftmals derart konstruiert, dass ein mit dem Auftreffen bzw. Aufschlagen des ballistischen Wirkkörpers eingeleiteter Impuls als sogenanntes "stumpfes Trauma" nahezu ungedämpft auf den Körper des Trägers weitergeleitet wird. Dies kann - ohne das Vorliegen einer äußeren Schädigung bzw. einer unmittelbaren Einwirkung des ballistischen Wirkkörpers - bei einem ausreichend schweren und schnellen Wirkkörper bzw. Projektil gleichermaßen zu lebensbedrohlichen Verletzungen innerer Organe der betroffenen Person führen.

Zusammenfassend ist im Stand der Technik somit die Ausbildung effektiver Schutzvorrichtungen, insbesondere vor dem Hintergrund einer komfortablen Anwendbarkeit bzw. Benutzung, problematisch bzw. von Relevanz. In diesem Zusammenhang sind insbesondere bei hartballistischen bzw. plattenförmigen Schutzelementen die zuvor angeführten Nachteile im Hinblick auf ein hohes Gewicht bei gleichzeitig eingeschränkter Beweglichkeit bzw. Behaglichkeit zu sehen. Zudem wird der Problematik einer flexiblen bzw. individuellen Anpassung an die Form bzw. Geometrie von unterschiedlichen zu bedeckenden bzw. zu schützenden Bereichen, insbesondere Körperbereichen, allenfalls unzureichend Rechnung getragen.

Die DE 10 2010 029 037 B4 betrifft beispielsweise eine ballistische Schutzweste mit einem hartballistischen Rückenteil, wobei das Rückenteil als plattenförmige hartballistische Einlage ausgebildet ist. Die Einlage kann aus einer Keramik, einem Polymer oder einem Metall hergestellt sein. Mit der gezeigten plattenförmigen Einlage gehen jedoch die zuvor beschriebenen Nachteile einher, insbesondere was den verringerten Tragekomfort infolge der schweren bzw. unflexiblen Ausbildung der plattenförmigen Einlage anbelangt.

Zudem betrifft die EP 1 135 663 B1 sowie die zu derselben Patentfamilie gehörende US 6 170 378 B1 eine Schutzvorrichtung mit Schutzfunktion gegenüber ballistischen Geschossen, wobei ein Hartmetallplattierungssystem aus Titanscheiben an einer Unterlage aus Aramidfasern befestigt ist. Die Schicht des klebstoffimprägnierten Aramids kann dazu verwendet werden, das durch die Platten gebildete Hartmetallplattierungssystem zu umhüllen. Mit den gezeigten plattenförmigen Metallelementen gehen jedoch die zuvor beschriebenen Nachteile hinsichtlich des erhöhten Gewichts und der eingeschränkten Beweglichkeit bzw. Behaglichkeit einher. Zudem wird jede der dargestellten Titanscheiben individuell einer spanenden Bearbeitung unterzogen, was mit vergleichsweise hohen Produktionskosten bzw. Herstellungskosten verbunden ist.

Die EP 1 828 706 B1 betrifft einen Schutz zum Aufhalten von Objekten, wie Schusswaffenprojektilen oder Granatsplittern, wobei der Schutz mehrere Komponenten umfassen soll, nämlich eine Einfassung, welche derart ausgelegt ist, dass das Objekt die Einfassung innerhalb wenigstens eines Bereiches durchdringen kann, sowie wenigstens eine Körnchen umfassende Zwischenschicht, welche innerhalb der Einfassung angeordnet ist und welche mit der Einfassung das Objekt verlangsamen soll. In diesem Zusammenhang sollen zudem die Körnchen relativ zueinander beweglich sein, wobei der von Körnchen eingenommene Raum in der Zwischenschicht mit einem Gasmedium gefüllt ist. Weiterhin sollen die Körnchen derart beschaffen sein, dass ein Körnchen zerbröselt und verteilt wird, wenn es von einem Objekt getroffen wird und dass benachbarte Körnchen Stöße mit anschließender Energieableitung erfahren, so dass das Objekt und Bruchstücke hiervon bei verringertem Querschlägerrisiko in dem Schutz verbleiben. Die Körnchen sollen zudem aus einem speziellen keramischen oder mineralischen Material bestehen. Zudem sollen die Körnchen derart angeordnet sein, dass zerbröselte Körnchen durch neue Körnchen ersetzt werden, welche durch ihr Eigengewicht zu Bereichen transportiert werden, die vorher Material enthielten, das zerbröselt worden ist.

Weiterhin betrifft die US 8 096 223 B1 eine Vorrichtung mit einer mehrschichtigen Panzerungs- bzw. Ballistikschutz-Kompositkomponente. Die in Rede stehende Komponente soll eine Vielzahl von Schichten energieableitender Objekt aufweisen, wobei hierzu eine erste Schicht mit einer Mehrzahl energieableitender Objekte und eine zweite Schicht mit einer Mehrzahl energieableitender Objekte eingesetzt werden soll, wobei die erste Mehrzahl energieableitender Objekte in der ersten Schicht relativ zueinander in einer dicht gepackten Anordnung gehalten werden sollen. Zudem soll eine erste Schicht eines Klebematerials mit einem ersten Durometerwert vorhanden sein, wobei die erste Mehrzahl an energieableitenden Objekten durch die erste Schicht des Klebemittels relativ zueinander gehalten bzw. fixiert werden. Weiterhin soll eine zweite Schicht eines Klebemittels mit einem im Vergleich zu dem ersten Wert geringeren Durometerwert vorhanden sein, wobei die zweite Schicht von der Beschussseite des Materials weiter beabstandet sein soll als die erste Schicht des Klebemittels.

Die EP 0 499 812 A1 betrifft einen zusammengesetzten Schutzkörper mit einem biegsamen flachen Gehäuse mit einer Bahn aus einem weichen ballistischen Material und einem Einsatz in dem biegsamen flachen Gehäuse mit einer Vielzahl von Teilkörpern aus Glas- oder Keramikmaterial, wobei die Teilkörper des Einsatzes eine achsensymmetrische oder mittelpunktsymmetrische Form und eine Größe haben, welche der eines bedrohlichen Gegenstands entspricht, vor dem geschützt werden soll, und in mindestens zwei übereinander angeordneten Schichten angeordnet sind, wobei in jeder der Schichten die Teilkörper in einer Strecke voneinander beabstandet sind, welche kleiner ist als die Größe eines Teilkörpers, wobei jeder Teilkörper in einer Schicht einen Zwischenraum zwischen zwei Teilkörpern einer anderen Schicht überbrückt und wobei jeder Teilkörper des Einsatzes an sämtliche umgebende Teilkörper mit thermoplastischem bzw. wärmehärtenden Material angeklebt ist.

Weiterhin betrifft die US 5 866 839 A ein Panzerungsschutzsystem zum Schutz eines einen Turm aufweisenden Panzers, wobei das System eine erste Anordnung eingeschlossener Metallkugeln, welche um den Turm herum angeordnet ist, um diesen im Wesentlichen zu umgeben sowie eine zweite Anordnung eingeschlossener Metallkugeln, welche in einem unteren Bereich des Panzers angeordnet ist, umfassen soll. Weiterhin ist eine dritte Anordnung eingeschlossener Metallkugeln vorgesehen, welche an einem Ort bzw. einer Position lokalisiert ist, an welchem bzw. welcher der Turm mit einem Bereich bzw. Abschnitt des Panzers verbunden ist. Die vorgenannten Anordnungen von eingeschlossenen Metallkugeln umfassen dabei jeweils einen Metallbehälter mit äußeren und inneren Wandungen, welche einen dazwischen angeordneten und zumindest als Teilhohlraum ausgebildeten Hohlraum ausbilden, wobei die eingeschlossenen Metallkugeln in den Metallbehältern angeordnet sind bzw. vorliegen.

Weiterhin betrifft die US 2010/0275765 A1 ein Panzerungssystem zur Anwendung an einem zu schützenden Objekt, wobei das Panzerungssystem den Durchtritt eines Projektils aufhalten soll. Dabei ist es vorgesehen, dass das Panzerungssystem eine Kernschicht aufweist. Die Kernschicht soll wiederum eine dichte bzw. enge Anordnung einer Schicht gehärteter Kugeln aufweisen, wobei die Kugeln einen Durchmesser aufweisen sollen, welcher dem ein- bis zweifachen des Durchmessers des Projektils entspricht, und wobei die Kugeln eine spezielle Oberflächenhärte aufweisen sollen. Die Kernschicht soll zudem ein Material aufweisen, welches viel weicher ist als die in der Kernschicht angeordneten Kugeln, wobei das Material die Kugeln umgeben soll, um diese in einer Anordnung in der Kernschicht zu halten. Zudem ist auf mindestens einer der Oberflächen der Kernschicht eine verstärkte Schicht zu Verstärkung der Panzerung vorgesehen.

Darüber hinaus betrifft die DE 39 38 741 A1 ein Material zur Herstellung einer schussfesten Panzerung mit mindestens einer schussfesten Schicht, wobei die schussfeste Schicht eine Vielzahl von in ihrer Position fixierten und sich berührenden geometrischen Körper umfasst, die einlagig angeordnet sind und deren Oberflächen derart ausgebildet sind, dass die Richtung eines auf die Außenfläche der geometrischen Körper auftreffenden Geschosses mindestens teilweise abgelenkt wird.

Zudem betrifft die EP 2 749 662 A1 einen Metallmatrix-Keramikverbundwerkstoff. Der in Rede stehende Verbundwerkstoff wird vollständig gebildet, indem mindestens ein Teil eines Matrixmetalls in eine Anordnung von Keramikkörnchen mittels *squeeze-casting* eindringen gelassen wird.

Die US 2012/0312150 A1 betrifft ein Körperpanzerverbundmaterial zum Schutz eines Trägers von aus Kleinwaffen stammenden Projektilen, wobei das Material eine flexible Auskleidung, ein auf der Auskleidung angeordnetes Polymerbindemittel sowie eine Vielzahl keramischer Feststoffkörper aufweist, welche in dem Bindemittel eingebettet sind, wobei die Feststoffkörper in einem einschichtigen Muster im Wesentlichen parallel zu der flexiblen Auskleidung angeordnet sind. Weiterhin betrifft die WO 99/50612 A1 eine Verbundpanzerplatte zum Absorbieren und Ableiten von kinetischer Energie von panzerbrechenden Geschossen mit hoher Geschwindigkeit, wobei die Platte eine einzige innere Schicht aus Keramikteilchen mit hoher Dichte umfasst, die direkt durch ein verfestigtes Material in Plattenform gebunden und festgehalten werden, wobei die Teilchen in mehreren aneinandergrenzenden Reihen gebunden sind. Dabei sollen die Teilchen eine bestimmte Zusammensetzung und spezielle physikalische Eigenschaften aufweisen.

Darüber hinaus betrifft die US 4 179 979 A eine Armierungssystem-Matrix, welche ein Mehrschichtensystem aus harten geometrischen Objekten aufweist, die in ihren Schichten durch ein Fasermaterial, welches mit den Objekten durch ein Klebermaterial verbunden ist, spannungsmäßig in ihren Schichten gehalten werden.

Zusammenfassend ist somit festzuhalten, dass die im Stand der Technik bekannten ballistischen Schutzvorrichtungen auf Basis weichballistischer und/oder hartballistischer Schutzsysteme signifikante Nachteile hinsichtlich ihres Tragekomforts und ihrer ballistischen Schutzfunktion aufweisen, sodass die Trageakzeptanz langfristig beeinträchtigt ist. Insbesondere fokussiert der Stand der Technik einerseits auf hartballistische Schutzsysteme, die - wie zuvor ausgeführt - nachteilig im Hinblick auf einen angemessenen Tragekomfort und einer situativen bzw. individuellen Anpassbarkeit an die Geometrie zu schützender Bereiche sind, oder auf partiell flexibel ausgebildete weichballistische Schutzsysteme andererseits, welche jedoch keinen ballistischen Schutz gegenüber bewehrungsdurchdringenden bzw. panzerbrechenden ballistischen Wirkkörpern aufweisen.

Vor diesem Hintergrund liegt daher der vorliegenden Erfindung die Aufgabe zugrunde, ein Schutzmaterial mit ballistischer Schutzfunktion bereitzustellen, welches die zuvor geschilderten Nachteile des Stands der Technik zumindest weitgehend zu vermeiden oder aber wenigstens abzuschwächen imstande ist.

Insbesondere ist eine Aufgabe der vorliegenden Erfindung darin zu sehen, ein Schutzmaterial bereitzustellen, welches gegenüber dem Stand der Technik - zumindest unter Aufrechterhaltung, vorzugsweise Verbesserung, der ballistischen Schutzfunktion - ein reduziertes Gewicht bei gleichzeitig verbesserter Beweglichkeit bzw. Tragkomfort aufweist, einhergehend mit einer hohen Trageakzeptanz, insbesondere über lange Gebrauchs- bzw. Verwendungszeiten. Insbesondere soll das erfindungsgemäße Schutzmaterial zudem individuell konfigurierbar bzw. anpassbar, vorzugsweise unter Einsatzbedingungen, an die Form und/oder Kontur zu bedeckender bzw. zu schützender Bereiche, insbesondere Körperbereiche, sein.

In diesem Zusammenhang zielt die vorliegende Erfindung insbesondere auf eine Verbesserung hartballistischer Schutzsysteme mit Schutzfunktion gegenüber bewehrungsdurchdringenden und/oder panzerbrechenden ballistischen Wirkkörpern mit hoher Auftreffenergie bzw. Durchschlagskraft ab, wie sie beispielsweise aus Langwaffen mit einer hohen Feuerkraft und/oder aus kurzer Entfernung abgegeben werden. Auch soll einem stumpfen Trauma infolge des durch den Aufprall des ballistischen Wirkkörpers eingeleiteten Impulses erfindungsgemäß entgegengewirkt werden.

Diesbezüglich sei ergänzend erwähnt, dass der Einsatz hartballistischer Schutzsysteme konstruktionsbedingt automatisch einen Stichschutz gegenüber Stichwaffen wie Messern oder Nadeln impliziert. Folglich wird beim erfindungsgemäßen Schutzmaterial eine derartige Schutzfunktion vorausgesetzt, ohne dass dies einer weiteren ergänzenden Erläuterung bedarf.

Zur Lösung der zuvor geschilderten Aufgabe schlägt die vorliegende Erfindung somit - gemäß einem **ersten** Aspekt der vorliegenden Erfindung - eine ballistische Schutzoberbekleidung, insbesondere in Form einer ballistischen und/oder beschusshemmenden Schutzweste oder -jacke, aufweisend mindestens ein ballistisches Schutzmaterial mit Schutzfunktion gegenüber ballistischen Wirkkörpern und mit einer Beschussfläche, gemäß Patentanspruch 1 vor; jeweils weitere vorteilhafte Weiterbildungen und Ausgestaltungen dieses Erfindungsaspekts sind Gegenstand der diesbezüglichen Unteransprüche.

Ein weiterer Gegenstand der vorliegenden Erfindung - gemäß einem **zweiten** Aspekt der vorliegenden Erfindung - ist eine ballistische Schutzbekleidungseinheit mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, mit Oberbekleidung und/oder Unterbekleidung sowie gegebenenfalls mit separatem Kopf- und/oder Gesichtsschutz, Halsschutz, Schulterschutz, Armschutz, Handschutz, Rumpfschutz, Torsoschutz, Genital- und/oder Analschutz und/oder Beinschutz, gemäß dem diesbezüglichen Anspruch.

Es versteht sich von selbst, dass bei der nachfolgenden Beschreibung der vorliegenden Erfindung solche Ausgestaltungen, Ausführungsformen, Vorteile, Beispiele oder dergleichen, welche nachfolgend - zu Zwecken der Vermeidung unnötiger Wiederholungen - nur zu einem einzelnen Erfindungsaspekt ausgeführt werden, selbstverständlich auch in Bezug auf die übrigen Erfindungsaspekte entsprechend gelten, ohne dass es einer ausdrücklichen Erwähnung bedarf.

Weiterhin versteht es sich von selbst, dass bei nachfolgenden Angaben von Werten, Zahlen und Bereichen die diesbezüglichen Werte-, Zahlen- und Bereichsangaben nicht beschränkend zu verstehen sind; es versteht sich für den Fachmann von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass sämtliche im Folgenden genannten Werte- bzw. Parameterangaben oder dergleichen grundsätzlich mit genormten bzw. standardisierten oder explizit angegebenen Bestimmungsverfahren oder aber anderenfalls mit dem Fachmann auf diesem Gebiet an sich geläufigen Bestimmungs- bzw. Messmethoden ermittelt bzw. bestimmt werden können. Sofern nicht anders angegeben, werden die zugrundeliegenden Werte bzw. Parameter unter Standardbedingungen (d.h. insbesondere bei einer Temperatur von 20 °C und/oder bei einem Druck von 1.013,25 hPa bzw. 1,01325 bar) ermittelt.

Im Übrigen gilt, dass bei sämtlichen nachstehend aufgeführten relativen bzw. prozentualen, insbesondere gewichtsbezogenen Mengenangaben zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe, insbesondere wie nachfolgend definiert - stets 100 % bzw. 100 Gew.-% resultieren. Dies versteht sich für den Fachmann aber von selbst.

Dies vorausgeschickt, wird im Folgenden die vorliegende Erfindung näher beschrieben und erläutert, und zwar auch anhand von erfindungsgemäße Ausführungsformen bzw. Ausführungsbeispiele darstellenden Zeichnungen bzw. Figurendarstellungen.

Im Zusammenhang mit der Erläuterung dieser bevorzugten Ausführungsformen bzw. Ausführungsbeispiele der vorliegenden Erfindung, welche jedoch in Bezug auf die vorliegende Erfindung keinesfalls beschränkend sind, werden auch weitergehende Vorteile, Eigenschaften und Merkmale der vorliegenden Erfindung aufgezeigt.

Dies vorausgeschickt, wird im Folgenden die vorliegende Erfindung näher und im Detail beschrieben.

Gegenstand der vorliegenden Erfindung - gemäß einem Erfindungsaspekt - ist somit eine ballistische Schutzoberbekleidung, insbesondere in Form einer ballistischen und/oder beschusshemmenden Schutzweste oder -jacke, aufweisend mindestens ein ballistisches Schutzmaterial mit Schutzfunktion gegenüber ballistischen Wirkkörpern und mit einer Beschussfläche,
wobei das Schutzmaterial mindestens einen der Beschussfläche zugeordneten und/oder die Beschussfläche ausbildenden, hartballistischen Abschnitt mit Schutzfunktion gegenüber ballistischen Wirkkörpern aufweist,
wobei der hartballistische Abschnitt einen Splitter- und/oder Ballistikschutzwert V₅₀, bestimmt nach STANAG 2920, von mindestens 180 m/s aufweist,
wobei der hartballistische Abschnitt eine Vielzahl von ballistischen und/oder beschusshemmenden, zumindest im Wesentlichen kugelförmigen Formkörpern (3) zum Absorbieren und/oder Ableiten und/oder Verteilen kinetischer Energie von ballistischen Wirkkörpern aufweist oder hieraus zumindest im Wesentlichen gebildet ist bzw. besteht,
wobei der Volumenanteil der Formkörper, bezogen auf das Gesamtvolumen des hartballistischen Abschnitts, im Bereich von 20 Vol.-% bis 99 Vol.-% liegt und/oder wobei der Gewichtsanteil der Formkörper, bezogen auf das Gesamtgewicht des hartballistischen Abschnitts, im Bereich von 20 Gew.-% bis 99 Gew.-% liegt,
wobei die Formkörper und/oder das Material der Formkörper jeweils eine Vickers-Härte von mindestens 1.200 HV, bestimmt gemäß DIN EN ISO 6507, aufweisen und
wobei die Formkörper zur Ausbildung eines zusammenhängenden Gefüges in Form eines mehrschichtigen Verbundwerkstoffs mittels Sintern, Löten, Schweißen oder dergleichen und/oder mittels mindestens eines Bindemittels dauerhaft miteinander verbunden sind, wobei das Bindemittel ausgewählt ist aus der Gruppe von (i) anorganischen Bindemitteln; (ii) organischen Bindemitteln; (iii) Polymerwerkstoffen; (iv) Klebstoffen; sowie (v) Mischungen oder Kombinationen der vorgenannten Materialien und wobei das Bindemittel im ausgehärteten Zustand zumindest partiell verformbar ausgebildet ist.

Der Begriff "Wirkkörper", wie er im Rahmen der vorliegenden Erfindung in generischer Weise verwendet wird, ist vorzugsweise breit zu verstehen und umfasst insbesondere feste Körper, die aus einer Feuerwaffe abgefeuert werden und sich auf einer ballistischen Flugbahn (Geschossbahn) ohne Eigenenergie oder Steuerung fortbewegen. Zudem umfasst der voranstehende Begriff auch durch Detonation bzw. Explosion freigesetzte ballistische Partikel bzw. Fragmente, insbesondere in Form von Splittern, die aus entsprechenden konventionellen oder unkonventionellen Sprengvorrichtungen oder dergleichen stammen können.

Unter dem Begriff "Beschussfläche", wie er im Rahmen der vorliegenden Erfindung verwendet wird, ist ein Bereich, insbesondere ein Oberflächenbereich, des Schutzmaterials, insbesondere des hartballistischen Abschnitts, zu verstehen, der im Tragezustand bzw. Gebrauchszustand (Verwendungszustand) einer, insbesondere unmittelbaren, Einwirkung der Wirkkörper ausgesetzt ist und/oder einem zu schützenden Bereich, insbesondere Körperbereich, zugeordnet ist.

Weiterhin ist unter dem Begriff "hartballistischer Abschnitt" im Rahmen der vorliegenden Erfindung ein Teil des Schutzmaterials, insbesondere eine Schicht des Schutzmaterials, zu verstehen, der bzw. die als durchschusshemmendes Schutzsystem einer unmittelbaren Einwirkung ballistischer Wirkkörper ausgesetzt ist. Mit anderen Worten bildet der hartballistische Abschnitt einen Widerstand gegenüber einem Durchdringen des Wirkkörpers und bestimmt somit maßgeblich die durch das Schutzmaterial realisierte ballistische Schutzfunktion.

Unter dem Begriff "Formkörper", wie er im Rahmen der vorliegenden Erfindung verwendet wird, ist vorzugsweise ein Panzerungselement, insbesondere Panzerungsbauteil, zu verstehen, das dem hartballistischen Abschnitt zugeordnet ist und die Beschussfläche aufweist oder ausbildet. Folglich ist der Formkörper im Sinne der vorliegenden Erfindung einem unmittelbaren Einwirken der Wirkkörper ausgesetzt und insbesondere zum Absorbieren und/oder Ableiten und/oder Verteilen der kinetischen Energie der ballistischen Wirkkörper ausgebildet. Insbesondere wird der auftreffende bzw. aufschlagende Wirkkörper - insbesondere unter plastischer Verformung des Formkörpers - durch den Formkörper abgelenkt und/oder in einzelne Bruchstücke zerteilt.

Erfindungsgemäß werden somit zur Ausbildung des hartballistischen Abschnitts eine Vielzahl von zumindest im Wesentlichen kugelförmigen Formkörpern eingesetzt, wobei die zumindest im Wesentlichen kugelförmige Ausbildung der Formkörper und deren Anordnung zueinander zwangsläufig mit der Bildung von Hohlräumen bzw. Leervolumina innerhalb des hartballistischen Abschnitts und folglich - insbesondere im Vergleich zu monolithisch bzw. einstückig ausgebildeten hartballistischen Schutzsystemen (insbesondere auf Plattenbasis) - mit einer Reduzierung der (Material-)Dichte und damit des Gewichts des Schutzmaterials, insbesondere des hartballistischen Abschnitts, einhergeht.

Die erfindungsgemäße Konzeption führt dabei zu einer signifikanten Verringerung des Gewichts des Schutzmaterials, sodass auf Basis der erfindungsgemäßen Konzeption insgesamt ein äußerst anwenderfreundliches Schutzmaterial bereitgestellt wird, wobei - wie nachfolgend noch im Detail ausgeführt - die ballistische Schutzfunktion des erfindungsgemäß eingesetzten Schutzmaterials gegenüber konventionellen, insbesondere plattenförmigen Schutzelementen zumindest im Wesentlichen erhalten bleibt oder insbesondere sogar verbessert wird.

Zudem wird durch das erfindungsgemäße Konzept eine gewichtssparende und gleichzeitig effektive ballistische Schutzfunktion erzielt. Dies bedeutet mit anderen Worten, dass mit dem erfindungsgemäß eingesetzten Schutzmaterial bei gleicher Dicke und/oder reduziertem Ausgangsgewicht entweder eine gleichwertige oder sogar verbesserte ballistische Schutzfunktion und/oder (bei gleicher Bedrohungsstufe) eine signifikante Gewichtsreduzierung des Schutzmaterials möglich ist.

Des Weiteren gestattet das erfindungsgemäße Konzept durch die gezielte Dimensionierung und/oder Anzahl der eingesetzten Formkörper eine individuelle bzw. situative Anpassung der ballistischen Schutzfunktion an die zu erwartende Bedrohungsstufe und/oder die Kontur und/oder die Form des zu bedeckenden bzw. zu schützenden Bereichs, insbesondere Körperbereichs. Dies ermöglicht eine universelle Anwendbarkeit bei einer gleichzeitigen Optimierung bzw. kostengünstigen Herstellung des erfindungsgemäß eingesetzten Schutzmaterials. Zudem zeichnet sich das erfindungsgemäß eingesetzte Schutzmaterial auch durch eine verbesserte Beweglichkeit aus, da durch die Bildung von Hohlräumen bzw. Leervolumina innerhalb des hartballistischen Abschnitts eine, zumindest partielle, Verformbarkeit, insbesondere Biegsamkeit, des Schutzmaterials realisiert wird. In diesem Zusammenhang gestattet das erfindungsgemäße Konzept darüber hinaus im Gebrauchszustand und/oder Tragezustand (Verwendungszustand) eine gezielte Anpassung des Schutzmaterials an die Form bzw. Geometrie zu schützender und/oder zu bedeckender Bereiche, insbesondere Körperbereiche.

Des Weiteren wird ein auf den Formkörper auftreffender Wirkkörper aufgrund der zumindest im Wesentlichen kugelförmigen Ausbildung der Formkörper abgelenkt, sodass die vom Wirkkörper ausgehende Auftreffkraft auf eine größere Auftrefffläche verteilt wird. Dies führt zu einer weiteren Verbesserung des Durchschlagsverhaltens des erfindungsgemäß eingesetzten Schutzmaterials, was mit anderen Worten bedeutet, dass bei gleicher Dicke bzw. reduziertem Ausgangsgewicht entweder eine Beibehaltung oder sogar Erhöhung der ballistischen Schutzfunktion und/oder bei geringerer Bedrohungsstufe eine Gewichtsreduzierung des erfindungsgemäßen Schutzmaterials ermöglicht wird.

Überdies gestattet die Vielzahl separater Formkörper eine, insbesondere strukturierte Verteilung der durch den Wirkkörper eingebrachten kinetischen Energie, sodass - insbesondere vor dem Hintergrund von Mehrfachtreffern - durch das erfindungsgemäß eingesetzte Schutzmaterial eine langfristig robuste ballistische Schutzfunktion ermöglicht wird.

Des Weiteren wirken die zwischen den Formkörpern eingeschlossen Hohlstellen bzw. Leervolumina als Materialunterbrechungen der Ausbreitung von Rissen innerhalb des hartballistischen Abschnitts entgegen, wodurch insgesamt ein robuster langfristiger Einsatz - insbesondere unter Bereitstellung einer langfristigen Formstabilität bzw. Funktionalität - des erfindungsgemäß eingesetzten Schutzmaterials gewährleistet ist.

Auch zeichnet sich das erfindungsgemäß eingesetzte Schutzmaterial durch eine ausgezeichnete Wasserdampfdurchlässigkeit bzw. Atmungsaktivität aus, welche insbesondere im Vergleich zu vollplattenförmigen Schutzmaterialien des Standes der Technik signifikant verbessert ist.

Das erfindungsgemäß eingesetzte Schutzmaterial vereint im Ergebnis somit durch die spezielle geometrische Ausbildung einer Vielzahl ballistisch beständiger Formkörper einen zuverlässigen ballistischen Schutz - insbesondere gegenüber bewehrungsdurchdringenden und/oder panzerbrechenden Wirkkörpern - sowie einen optimierten Tragekomfort bzw. eine langfristig hohe Trageakzeptanz bei gleichzeitig ressourcensparender Herstellung sowie flexibler Anpassungsfähigkeit, was im Ergebnis zu einem hochleistungsfähigen ballistischen Schutzmaterial mit verbesserten Anwendungs- und Herstellungseigenschaften, reduziertem Eigengewicht und erhöhtem Tragekomfort, insbesondere auch erhöhter Atmungsaktivität bzw. Wasserdampfdurchlässigkeit, führt.

Diesbezüglich sei ergänzend erwähnt, dass im Rahmen der vorzugsweise hartballistischen Schutzfunktion aus konstruktionstechnischen Gründen gleichermaßen ein Stichschutz gegenüber Stichwaffen, wie Messern oder Nadeln, impliziert ist. Folglich wird im Rahmen der vorliegenden Erfindung eine derartige Schutzfunktion ohne ergänzende diesbezügliche Ausführungen als gegeben bzw. vorausgesetzt.

Es versteht sich von selbst, dass bei der nachfolgenden Beschreibung der vorliegenden Erfindung solche Ausgestaltungen, Ausführungsformen, Vorteile, Beispiele oder dergleichen, welche nachfolgend - zu Zwecken der Vermeidung unnötiger Wiederholungen - nur zu einem einzelnen Erfindungsaspekt ausgeführt werden, selbstverständlich auch in Bezug auf die übrigen Erfindungsaspekte entsprechend gelten, ohne dass es einer ausdrücklichen Erwähnung bedarf.

Weiterhin versteht es sich von selbst, dass bei nachfolgenden Angaben von Werten, Zahlen und Bereichen die diesbezüglichen Werte, Zahlen und Bereichsangaben nicht beschränkend zu verstehen sind; es versteht sich für den Fachmann von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass sämtliche im Folgenden genannten Werte bzw. Parameterangaben oder dergleichen grundsätzlich mit genormten bzw. standardisierten oder explizit angegebenen Bestimmungsverfahren oder aber andernfalls mit dem Fachmann auf diesem Gebiet an sich geläufigen Bestimmungs- bzw. Messmethoden ermittelt bzw. bestimmt werden können. Sofern nicht anders angegeben, werden die zugrundeliegenden Werte bzw. Parameter unter Standardbedingungen (d. h. insbesondere bei einer Temperatur von 20 °C und/oder bei einem Druck von 1.013,25 Hektopascal bzw. 1,01325 bar) ermittelt.

Im Übrigen gilt, dass bei sämtlichen nachstehend aufgeführten relevanten bzw. prozentualen, insbesondere gewichtsbezogenen Mengenangaben, zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe, insbesondere wie nachfolgend definiert - stets 100 % bzw. 100 Gew.-% resultieren. Dies versteht sich für den Fachmann aber von selbst.

Dies vorausgeschickt wird im Folgenden die vorliegende Erfindung näher beschrieben und erläutert, und zwar auch anhand von bevorzugten Ausführungsformen bzw. Ausführungsbeispielen darstellenden Zeichnungen bzw. Figurendarstellungen.

In den Figurendarstellungen zeigt:
- Fig. 1A: eine schematische Querschnittsdarstellung des Aufbaus eines erfindungsgemäß eingesetzten Schutzmaterials gemäß einer erfindungsgemäßen Ausführungsform mit einem hartballistischen Abschnitt;
- Fig. 1B: eine schematische Querschnittsdarstellung des Aufbaus eines erfindungsgemäß eingesetzten Schutzmaterials gemäß einer alternativen erfindungsgemäßen Ausführungsform mit mehreren hartballistischen Abschnitten;
- Fig. 2: eine schematische, perspektivische Darstellung einer erfindungsgemäßen Schutzkleidung in Form einer ballistischen Schutzweste mit erfindungsgemäß beschriebenen Schutzelementen, wobei die erfindungsgemäß beschriebenen Schutzelemente im Tragezustand unterschiedlichen Körperbereichen zugeordnet sind und/oder im Tragezustand unterschiedliche Körperbereiche bedecken; und
- Fig. 3: eine schematische frontseitige Draufsicht einer erfindungsgemäßen Schutzbekleidungseinheit mit erfindungsgemäß beschriebenen Schutzelementen, wobei die erfindungsgemäßen Schutzelemente im Tragezustand unterschiedlichen Körperbereichen zugeordnet sind und/oder im Tragezustand unterschiedliche Körperbereiche bedecken.

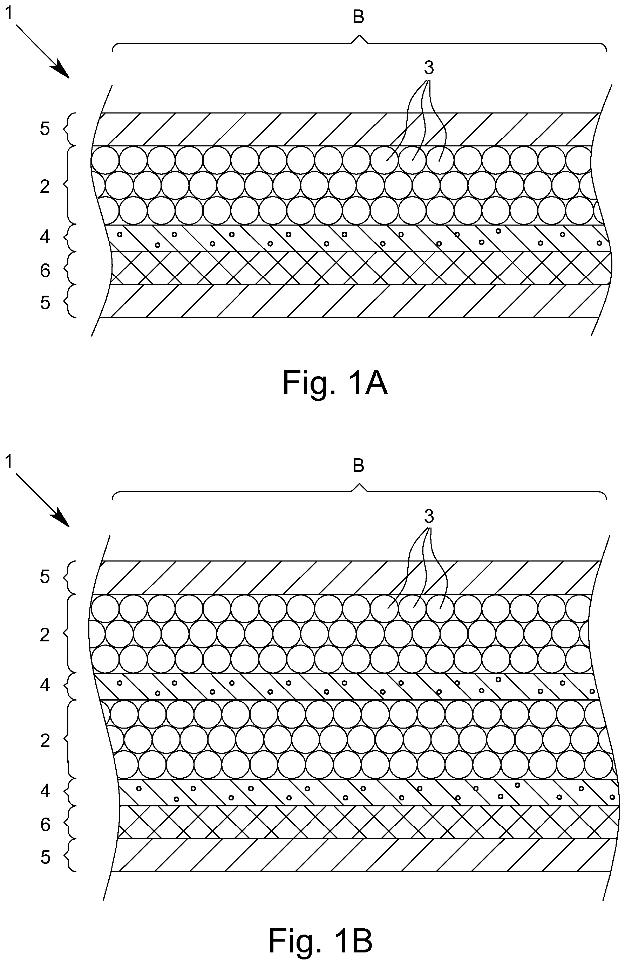

Fig. 1A und 1B zeigen jeweils eine schematische Querschnittsdarstellung des Aufbaus eines für die erfindungsgemäße ballistische Schutzoberbekleidung eingesetzten Schutzmaterials 1, vorzugsweise ballistischen Schutzmaterials mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern. Das erfindungsgemäß eingesetzte Schutzmaterial 1 weist dabei mindestens einen hartballistischen Abschnitt 2, insbesondere mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, auf.

In diesem Zusammenhang kann es erfindungsgemäß vorgesehen sein, die Anzahl der hartballistischen Abschnitte 2 innerhalb des Schutzmaterials 1 zu variieren. So zeigt Fig. 1A das erfindungsgemäß eingesetzte Schutzmaterial 1 mit einem hartballistischen Abschnitt 2 und Fig. 1B das erfindungsgemäß eingesetzte Schutzmaterial 1 mit zwei hartballistischen Abschnitten 2. Dabei ist es erfindungsgemäß vorgesehen, dass der hartballistische Abschnitt 2 eine Vielzahl von zumindest im Wesentlichen kugelförmigen Formkörpern 3, bevorzugt Panzerungsformkörpern, zum Absorbieren und/oder Ableiten und/oder Verteilen kinetischer Energie der ballistischen Wirkkörper, insbesondere bewehrungsdurchdringenden und/oder panzerbrechenden Geschosse, Schubkörper oder Eindringkörper, aufweist.

Wie Fig. 1A und 1B darüber hinaus zu entnehmen ist, weist das Schutzmaterial 1 eine Beschussfläche B auf. Die Beschussfläche B ist dabei vorzugsweise dem hartballistischen Abschnitt 2 zugeordnet. Insbesondere wird die Beschussfläche B durch den hartballistischen Abschnitt 2 ausgebildet. In diesem Zusammenhang ist es von Vorteil, wenn die Beschussfläche B im Gebrauchszustand (Verwendungszustand) und/oder Tragezustand einer, vorzugsweise unmittelbaren, Einwirkung der ballistischen Wirkkörper (Wurfkörpers), insbesondere in Form eines Auftreffens und/oder Aufschlagens und/oder Einschlagens, ausgesetzt ist. Zudem ist es erfindungsgemäß von Vorteil, wenn die Beschussfläche B im Gebrauchszustand (Verwendungszustand) und/oder Tragezustand einem zu schützenden Bereich, insbesondere Körperbereich, zugeordnet ist und/oder wenn die Beschussfläche B im Gebrauchszustand (Verwendungszustand) und/oder Tragezustand einen zu schützenden Bereich, insbesondere Körperbereich, bedeckt.

In diesem Zusammenhang verhält es sich im Rahmen der vorliegenden Erfindung insbesondere derart, dass der hartballistische Abschnitt 2 schichtartig, vorzugsweise flächig, insbesondere mit zwei gegenüberliegenden Seiten ausgebildet ist, so dass die Beschussfläche B durch eine Seite des hartballistischen Abschnitts 2 gebildet und/oder ausgebildet ist.

Was die Anordnung bzw. Positionierung der Formkörper 3 anbelangt, so kann es erfindungsgemäß vorgesehen sein, dass die Formkörper 3 innerhalb des hartballistischen Abschnitts 2 regelmäßig oder unregelmäßig angeordnet sind.

Der Begriff "regelmäßig", wie er erfindungsgemäß im Hinblick auf die Anordnung der Formkörper 3 innerhalb des hartballistischen Abschnitts 2 verwendet wird, ist dabei insbesondere derart zu verstehen, dass die Formkörper 3 innerhalb des hartballistischen Abschnitts 2 in Form eines gleichmäßigen, dreidimensionalen Musters zueinander angeordnet sind.

Wie in Fig. 1A und 1B schematisch dargestellt, können die Formkörper 3 innerhalb des hartballistischen Abschnitts 2 zumindest im Wesentlichen aneinander anliegend und/oder zumindest im Wesentlichen einander berührend angeordnet sein.

Im Zusammenhang bezeichnen die Begriffe "aneinander anliegend" und/oder "einander berührend", wie sie im Rahmen der vorliegenden Erfindung verwendet werden, nicht nur einen direkten bzw. unmittelbaren Kontakt der Formkörper 3 zueinander. Darüber hinaus schließen die vorgenannten Begriffe auch eine mittelbare bzw. indirekte Verbindung, beispielsweise infolge eines Bindemittels zwischen den jeweiligen Kontaktbereichen der Formkörper 3, mit ein.

Dadurch, dass die Vielzahl der Formkörper 3 innerhalb des hartballistischen Abschnitts 2 aneinander anliegend und/oder einander berührend zueinander angeordnet sind, wird - ohne sich auf diese Theorie beschränken zu wollen - eine effektive Verteilung und/oder Weiterleitung und/oder Aufteilung der durch den Wirkkörper eingeleiteten kinetischen Energie und/oder Auftreffkraft über die Vielzahl der Formkörper 3 realisiert. Durch die Verteilung bzw. Aufteilung der kinetischen Energie und/oder Auftreffkraft infolge eines Aufschlagens und/oder Einschlagens des ballistischen Wirkkörpers über die Vielzahl von Formkörpern 3 werden lokale Spannungsspitzen innerhalb des hartballistischen Abschnitts 2 effektiv abgebaut bzw. weitergeleitet, wodurch insgesamt die Beständigkeit des Schutzmaterials 1 - insbesondere im Hinblick auf ein lokales Überschreiten der Spaltbruchspannung, einhergehend mit einem Splittern bzw. Herauslösen von Fragmenten aus den jeweiligen Formkörpern 3 - verbessert wird.

Darüber hinaus kann es erfindungsgemäß vorgesehen sein, dass die Formkörper 3 innerhalb des hartballistischen Abschnitts 2 schichtweise, insbesondere geschichtet oder gestapelt, übereinander angeordnet sind.

In diesem Zusammenhang ist es erfindungsgemäß von Vorteil, wenn jede übergeordnete Schicht von Formkörpern 3 durch die darunterliegende Schicht von Formkörpern 3 abgestützt wird. Insbesondere greifen hierzu die schichtweise übereinander angeordneten und/oder gestapelten Formkörper 3 teilweise ineinander ein, sodass die schichtweise übereinander angeordneten und/oder gestapelten Formkörper 3, insbesondere in radialer Richtung, relativ zueinander gehalten und/oder gelagert sind.

Gleichermaßen ist es erfindungsgemäß von Vorteil, wenn die Formkörper 3 zumindest im Wesentlichen die gleiche Größe, vorzugsweise zumindest im Wesentlichen den gleichen Durchmesser, aufweisen. Insbesondere ist es erfindungsgemäß in diesem Zusammenhang von Vorteil, wenn sich die kugelförmigen Formkörper 3 in der Längs- und in der Breitenausdehnung an ihren größten Durchmesser einander berühren. Hierdurch wird eine homogene Druckspannungsverteilung entlang des hartballistischen Abschnitts 2 über eine Vielzahl kugelförmiger Formkörper 3 mit dem gleichen Durchmesser erreicht, wodurch das Auftreten lokaler Spanungsspitzen, einhergehend mit einem lokalen Materialversagen, weitergehend minimiert wird.

Insbesondere sind die Vielzahl der Formkörper 3 innerhalb des hartballistischen Abschnitts 2 dichtest zueinander angeordnet.

Diesbezüglich verhält es sich erfindungsgemäß insbesondere derart, dass die Formkörper 3 derart innerhalb des hartballistischen Abschnitts 2 angeordnet sind, dass die Volumendifferenz zwischen dem Gesamtvolumen des hartballistischen Abschnitts 2 einerseits und der Summe der je einzelnem Formkörper 3 eingenommenen Teilvolumina andererseits zumindest im Wesentlichen minimiert ist. Dabei ist es erfindungsgemäß bevorzugt, wenn die vorgenannte Volumendifferenz weniger als 50 Vol.-%, vorzugsweise weniger als 40 Vol.-%, bevorzugt weniger als 35 Vol.-%, besonders bevorzugt weniger als 30 Vol.-%, des Gesamtvolumens des hartballistischen Abschnitts 2 beträgt. Dadurch, dass das insgesamt innerhalb des hartballistischen Abschnitts 2 zur Verfügung stehende Volumen im Wesentlichen durch die Vielzahl der Formkörper 3 mit ballistischer Schutzfunktion eingenommen ist, wird die Schutzfunktion des Schutzmaterials 1 gegenüber den ballistischen Wirkkörpern insgesamt verbessert. Darüber hinaus wird eine besonders stabile bzw. robuste Anordnung, insbesondere Stapelung, der Formkörper 3 innerhalb des hartballistischen Abschnitts 2 unter Minimierung der zwischen den Formkörpern 3 gebildeten Hohlstellen bzw. Leervolumina ermöglicht.

Was den Volumenanteil der Formkörper 3 bezogen auf das Gesamtvolumen des hartballistischen Abschnitts 2 anbelangt, so ist es erfindungsgemäß vorgesehen, dass der Volumenanteil der Formkörper 3 im Bereich von 20 Vol.% bis 99 Vol.%, vorzugsweise im Bereich von 30 Vol.% bis 95 Vol.%, besonders bevorzugt im Bereich von 40 Vol.% bis 90 Vol.%, ganz besonders bevorzugt im Bereich von 50 Vol.% bis 85 Vol.%, noch weiter bevorzugt im Bereich von 60 Vol.% bis 80 Vol.%, liegt.

Im Rahmen der vorliegenden Erfindung kann es darüber hinaus vorgesehen sein, dass der Gewichtsanteil der Formkörper 3, bezogen auf das Gesamtgewicht des hartballistischen Abschnitts 2, im Bereich von 20 Gew.% bis 99 Gew.%, vorzugsweise im Bereich von 30 Gew.% bis 98 Gew.%, besonders bevorzugt im Bereich von 40 Gew.% bis 97 Gew.%, ganz besonders bevorzugt im Bereich von 50 Gew.% bis 96 Gew.%, noch weiter bevorzugt im Bereich von 60 Gew.% bis 95 Gew.%, liegt. Dadurch, dass der Großteil des Gesamtgewichts des hartballistischen Abschnitts 2 durch die Vielzahl der zumindest im Wesentlichen kugelförmigen Formkörper 3 mit ballistischer Schutzfunktion gebildet ist, wird die Schutzwirkung des Schutzmaterials 1 gegenüber ballistischen Wirkkörpern weiterführend optimiert.

Was die Formkörper 3 weiterhin anbelangt, so können deren Größe, insbesondere deren Durchmesser, in weiten Bereichen variieren. Es hat sich jedoch bewährt, wenn die Größe, insbesondere die Durchmesser, der Formkörper 3 im Bereich von 0,1 mm bis 10 cm, vorzugsweise im Bereich von 0,5 mm bis 5 cm, besonders bevorzugt im Bereich von 1 mm bis 4 cm, ganz besonders bevorzugt im Bereich von 2 mm bis 3 cm, noch mehr bevorzugt im Bereich von 5 mm bis 2 cm, liegt. Die voranstehenden Angaben sind vorzugsweise als mittlerer Durchmesser der Formkörper 3 zu verstehen, beispielsweise und in nicht beschränkender Weise ermittelt durch übliche Methoden, wie Laserbeugung oder Siebanalyse, was dem Fachmann wohlbekannt ist.

Weiterhin kann es gemäß der erfindungsgemäßen Konzeption vorgesehen sein, dass die Formkörper 3 aus einem ballistisch beständigen Hartmaterial (Hartwerkstoff), insbesondere aus einem gegenüber ballistischen Wirkkörpern (Wurfkörpern) beständigen und/oder undurchdringbaren und/oder durchschusshemmenden Hartmaterial hergestellt sind.

Der Begriff "ballistisch beständig", wie er erfindungsgemäß verwendet wird, ist dabei breit zu verstehen und bezieht sich insbesondere auf die Eigenschaft eines Materials, einer Auftreffkraft bzw. Durchschlagskraft eines, insbesondere ballistischen, Wirkkörpers entgegenzuwirken und auf diese Art und Weise ein Durchdringen bzw. Durchschlagen des Wirkkörpers zu verhindern. In diesem Zusammenhang ist das Material des Formkörpers 3 zumindest partiell, vorzugsweise plastisch, verformbar, wobei auch eine zumindest teilweise Zerstörung, beispielsweise in Form eines Herauslösens von Splittern bzw. Fragmenten infolge des Auftreffens bzw. Aufschlagens des Wirkkörpers möglich ist.

In diesem Zusammenhang ist es erfindungsgemäß vorgesehen, dass die Formkörper 3 insbesondere hergestellt sind aus einem Hartmaterial, ausgewählt aus der Gruppe von (i) Polymerwerkstoffen, vorzugsweise Polyolefinen, wie Polyethylenen oder Polypropylenen, insbesondere schlagfesten und/oder metall- oder faserverstärkten Polymerwerkstoffen, besonders bevorzugt Polyolefinen mit ultrahohem Molekulargewicht (*Ultra High Molecular Weight Polyolefins* bzw. UHMW-PO); (ii) metallischen Werkstoffen, insbesondere Stahl; (iii) Keramikwerkstoffen; (iv) anorganischen, insbesondere (halb)metallischen Carbiden, Nitriden, Siliciden und Oxiden, insbesondere Aluminiumoxiden, Berylliumoxiden, Siliciumoxiden, Siliciumcarbiden, Siliciumnitriden, Borcarbiden und Bornitriden; sowie (v) Mischungen oder Kombinationen der vorgenannten Materialien.

Im Rahmen der vorliegenden Erfindung hat es sich insbesondere als vorteilhaft erwiesen, wenn die Formkörper 3 insbesondere hergestellt sind aus einem Hartmaterial (Hartwerkstoff), ausgewählt aus der Gruppe von (i) metallischen Werkstoffen, insbesondere Stahl; (ii) Keramikwerkstoffen; (iii) anorganischen, insbesondere (halb)metallischen Carbiden, Nitriden, Siliciden und Oxiden, insbesondere Aluminiumoxiden, Berylliumoxiden, Siliciumoxiden, Siliciumcarbiden, Siliciumnitriden, Borcarbiden und Bornitriden; sowie (iv) Mischungen oder Kombinationen der vorgenannten Materialien.

Was nun die Härte der Formkörper 3 und/oder des Materials der Formkörper 3 anbelangt, so kann diese in weiten Bereichen in Abhängigkeit zum Grad der zu erwartenden Bedrohungsstufe variieren. Es hat sich jedoch als vorteilhaft erwiesen, dass die Formkörper 3 und/oder das Material der Formkörper 3 jeweils eine Vickers-Härte von mindestens 1.200 HV, vorzugsweise mindestens 1.600 HV, insbesondere mindestens 1.800 HV, ganz besonders bevorzugt mindestens 2.000 HV, insbesondere bestimmt gemäß DIN EN ISO 6507, aufweisen und/oder dass die Formkörper 3 und/oder das Material der Formkörper 3 jeweils eine Vickers-Härte im Bereich von 1.200 HV bis 10.000 HV, vorzugsweise im Bereich von 1.600 HV bis 9.000 HV, insbesondere im Bereich von 1.800 HV bis 8.000 HV, ganz besonders bevorzugt im Bereich von 2.000 HV bis 6.000 HV, insbesondere bestimmt gemäß DIN EN ISO 6507, aufweisen.

Die erfindungsgemäß angegebenen Härtewerte, bestimmt nach Vickers gemäß DIN EN ISO 6507, beziehen sich dabei insbesondere auf eine Durchführung im Makrobereich bei einer Prüfkraft im Bereich von 49,03 N bis 980,7 N, einer Einwirkdauer im Bereich von 10 s bis 15 s und bei einer Prüftemperatur im Bereich von 10 °C bis 35 °C.

Wie zuvor beschrieben, hat es sich im Rahmen der vorliegenden Erfindung als vorteilhaft erwiesen, wenn die Formkörper 3 insbesondere hergestellt sind aus einem ballistisch beständigen Material, vorzugsweise Hartmaterial (Hartwerkstoff), insbesondere aus einem gegenüber ballistischen Wirkkörpern (Wurfkörpern) beständigen und/oder undurchdringbaren und/oder durchschusshemmenden Material, vorzugsweise Hartmaterial (Hartwerkstoff), insbesondere wie zuvor beschrieben. Gemäß einer besonderen Ausführungsform können dabei die Formkörper 3 aus Vollmaterial, insbesondere in Form von Vollkugeln, (aus-)gebildet sein bzw. hieraus bestehen. Gemäß einer alternativen besonderen Ausführungsform können dabei die Formkörper 3 aber auch als Hohl(form)körper, insbesondere in Form von Hohlkugeln, (aus-)gebildet sein; hierdurch kann eine signifikante Gewichtseinsparung bewirkt werden (z. B. um 20 bis 30 % im Vergleich zum Vollmaterial). Gemäß einer wiederum alternativen besonderen Ausführungsform können aber die Formkörper 3 auch aus geknäuelten und/oder zusammengeballten Fäden oder (Mono-)Filamenten, insbesondere Textilfäden, bevorzugt Metall- oder Polymerwerkstoff-Fäden oder -(Mono-)Filamenten, (aus-)gebildet sein (wobei als Polymerwerkstoffe die nachfolgend noch genannten Materialien zum Einsatz kommen können, wie insbesondere Aramide, Hochleistungspolyolefine, wie z. B. HPPEs oder UHMW-PEs, Hochleistungspolyester etc.); auch bei dieser Ausführungsform kann im Vergleich zum Vollmaterial eine signifikante Gewichtseinsparung bewirkt werden.

Gemäß einer bevorzugten Ausführungsform sind die Formkörper 3 miteinander verbunden, insbesondere dauerhaft und/oder stoffschlüssig miteinander verbunden, insbesondere mittels mindestens eines Bindemittels und/oder mittels Sintern, Löten, Schweißen oder dergleichen.

Der Begriff "Bindemittel", wie er im Rahmen der vorliegenden Erfindung verwendet wird, beschreibt vorzugsweise einen Stoff, durch welchen Feststoffe miteinander verbunden bzw. auf einer Unterlage verbunden, insbesondere verklebt, werden. Dabei werden Bindemittel vorzugsweise meist in flüssiger Form dem zu bindenden Feststoff zugesetzt.

Was die Verbindung der Formkörper 3 miteinander anbelangt, so kann es erfindungsgemäß vorgesehen sein, dass die Formkörper 3 - insbesondere zur Ausbildung des hartballistischen Abschnitts 2 - miteinander verbunden sind, insbesondere dauerhaft und/oder stoffschlüssig miteinander verbunden sind, insbesondere mittels Sintern, Löten, Schweißen oder dergleichen.

Gleichermaßen kann es in diesem Zusammenhang erfindungsgemäß vorgesehen sein, dass die Formkörper 3 zur Ausbildung des hartballistischen Abschnitts 2 mittels mindestens eines Bindemittels miteinander verbunden sind.

Im Rahmen der vorliegenden Erfindung verhält es sich derart, dass die Formkörper 3 zur Ausbildung eines zusammenhängenden, insbesondere strukturierten, Gefüges in Form eines mehrschichtigen Verbundwerkstoffs (Kompositwerkstoffs) dauerhaft miteinander verbunden sind, und zwar mittels des Bindemittels und/oder mittels Sintern, Löten, Schweißen oder dergleichen.

Insbesondere ist es im Rahmen der vorliegenden Erfindung bevorzugt, wenn das Bindemittel ausgewählt ist aus der Gruppe von anorganischen Bindemitteln, insbesondere mineralischen, hydraulischen, nichthydraulischen, hartmetallischen oder keramischen Bindemitteln, insbesondere auf Basis von Zementen, Tonen und Tonerden, Wasserglas oder Silikaten. Zudem ist jedoch auch der Einsatz von organischen Bindemitteln, insbesondere Kunstharzdispersionen oder Zweikomponentenreaktionsharze möglich. Des Weiteren ist es ebenfalls möglich, das Bindemittel aus der Gruppe von Polymerwerkstoffen, vorzugsweise Polysulfiden, Polyurethan, Epoxiden, Silikon und/oder silanterminierten Polymeren auszuwählen. Zudem ist es ebenfalls möglich, Klebstoffe, vorzugsweise organisch basierte und/oder polymerbasierte Klebstoffe, insbesondere Schmelzklebstoffe, vorzugsweise reaktive Schmelzklebstoffe als erfindungsgemäßes Bindemittel einzusetzen. Des Weiteren sind auch Mischungen oder Kombinationen der vorgenannten Gruppen bzw. Materialien zur Ausbildung des Bindemittels möglich.

Erfindungsgemäß ist das Bindemittel im ausgehärteten Zustand zumindest partiell verformbar ausgebildet, vorzugsweise zumindest partiell elastisch und/oder reversibel verformbar und/oder partiell flexibel ausgebildet. Dies gestattet im Gebrauchszustand (Verwendungszustand) und/oder Tragezustand eine, vorzugsweise elastische, relative Bewegung der mittels des Bindemittels miteinander verbundenen Formkörper 3 zueinander.

Erfindungsgemäß hat es sich zudem als vorteilhaft erwiesen, wenn das Schutzmaterial 1 zusätzlich zum hartballistischen Abschnitt 2 mindestens einen weichballistischen Abschnitt 4 aufweist und/oder das Schutzmaterial 1 außerdem mindestens einen weichballistischen Abschnitt 4 aufweist.

Der Begriff "weichballistischer Abschnitt", wie er im Rahmen der vorliegenden Erfindung verwendet wird, bezieht sich insbesondere auf ein zumindest teilweise flexibles ballistisches Schutzsystem auf Basis einer vorzugsweise netzartigen bzw. gewebeartigen Struktur. Dabei weist der weichballistische Abschnitt 4 im Vergleich zum hartballistischen Abschnitt 2 eine gewisse Dehnbarkeit auf, wodurch eine Energieaufnahme bzw. Adsorption der durch den Wirkkörper eingebrachten Geschossenergie bzw. kinetischen Energie bewirkt wird. Insbesondere ist die ballistische Schutzfunktion des weichballistischen Abschnitts 4 gegenüber dem hartballistischen Abschnitt 2 insofern verringert, als dass der weichballistische Abschnitt 4 keinen wirksamen ballistischen Schutz gegenüber bewehrungsdurchdringenden oder panzerbrechenden Wirkkörpern aufweist.

Durch die spezielle erfindungsgemäße Kombination aus mindestens einem hartballistischen Abschnitt 2 und einem weichballistischen Abschnitt 4 wird die ballistische Schutzfunktion des Schutzmaterials 1 insgesamt verbessert, insbesondere wobei durch den partiell dehnbaren weichballistischen Abschnitt 4 ergänzend zur Schutzfunktion des hartballistischen Abschnitts 2 eine Verbesserung der stoßabsorbierenden Eigenschaft des Schutzmaterials 1 insgesamt ermöglicht wird, insbesondere im Hinblick auf eine Reduzierung des auf den Träger einwirkenden stumpfen Traumas.

Insbesondere verhält es sich im Rahmen der vorliegenden Erfindung derart, dass der weichballistische Abschnitt 4 bevorzugt schichtartig, vorzugsweise flächig, insbesondere mit zwei gegenüberliegenden Seiten, aufgebaut ist, wobei der weichballistische Abschnitt 4 derart im Schutzmaterial 1 und/oder relativ zum hartballistischen Abschnitt 2 angeordnet ist, dass im Gebrauchszustand (Verwendungszustand) und/oder Tragezustand der weichballistische Abschnitt 4 keiner unmittelbaren Einwirkung ballistischer Wirkkörper ausgesetzt ist und/oder dass, vorzugsweise ausschließlich, der hartballistische Abschnitt 2, insbesondere eine Seite des hartballistischen Abschnitts 2, einer unmittelbaren Einwirkung ballistischer Wirkkörper (Wurfkörpern), insbesondere in Form eines Auftreffens und/oder Aufschlagens und/oder Einschlagens, ausgesetzt ist. Mit anderen Worten ist der weichballistische Abschnitt 4 im Gebrauchszustand (Verwendungszustand) und/oder Tragezustand allenfalls einer mittelbaren Einwirkung ballistischer Wirkkörper ausgesetzt, insbesondere in Form von Fragmenten des Wirkkörpers und/oder infolge des Auftreffens des Wirkkörpers aus dem Formkörper 3 herausgelösten Splittern bzw. Fragmenten. Insbesondere bildet der weichballistische Abschnitt 5 somit einen effektiven Splitterschutz gegenüber aus dem Wirkkörpern und/oder Formkörper 3 herausgelösten Splittern bzw. Fragmenten mit - insbesondere gegenüber den bewehrungsdurchdringenden und/oder panzerbrechenden Wirkkörpern - verringerter Auftreffenergie bzw. Durchschlagskraft.

In diesem Zusammenhang können der hartballistische Abschnitt 2 und der weichballistische Abschnitt 4 lose aufeinander gestapelt sein. Erfindungsgemäß ist es jedoch von Vorteil, wenn der weichballistische Abschnitt 4 mit dem hartballistischen Abschnitt 2 verbunden ist, insbesondere dauerhaft verbunden ist, vorzugsweise durch Verkleben, Verheften, Vernähen oder dergleichen. Erfindungsgemäß ist es zudem von Vorteil, wenn der weichballistische Abschnitt 4 aus einem Polymerwerkstoff, insbesondere ausgewählt aus der Gruppe von Aramiden oder Hochleistungspolyolefinen, insbesondere Polyethylenen mit ultrahohem Molekulargewicht, hergestellt ist. Was die Ausbildung des weichballistischen Abschnitts 4 anbelangt, so ist es erfindungsgemäß bevorzugt, wenn der weichballistische Abschnitt 4 als ein vorzugsweise textiles Flächengebilde oder als ein vorzugsweise textiles Flächenmaterial, insbesondere als ein Gewebe, Gewirke, Gestricke, Gelege, Vlies oder Nonwoven ausgebildet ist, wie in den Schnittdarstellungen gemäß Fig. 1A und 1B schematisch illustriert.

Gleichermaßen ist es erfindungsgemäß vorgesehen, wenn der weichballistische Abschnitt 4 Fasern und/oder Garne auf Basis von Polymerwerkstoffen aufweist oder hieraus besteht, insbesondere ausgewählt aus der Gruppe von Aramiden oder Polybenzazolen oder Hochleistungspolyolefinen, insbesondere Hochleistungspolyethylenen, insbesondere Polyethylenen mit ultrahohem Molekulargewicht. Zudem ist auch der Einsatz von Hochleistungspolyestern (hochfesten Polyestern) sowie deren Copolymerenkombination und Mischungen möglich.

Was die vorliegende Erfindung weiterhin anbelangt, so wird in Bezug auf das Material des weichballistischen Abschnitts 4 mindestens ein Polyolefin mit ultrahohem Molekulargewicht, insbesondere mindestens ein Polyethylen mit ultrahohem Molekulargewicht (*Ultra High Molecular Weight Polyolefins* bzw. UHMW-PO), eingesetzt, und zwar insbesondere in Form eines Garns bzw. eines Zwirns bzw. eines Fadens, besonders bevorzugt in Form eines Garns, zur Ausbildung eines textilen Flächengebildes. In diesem Zusammenhang hat die Anmelderin in völlig überraschender Weise herausgefunden, dass sich der Einsatz eines derart speziellen Materials in besonderer Weise zur Ausbildung des weichballistischen Abschnitts 4 eignet und gegenüber dem im Stand der Technik vorgesehenen Materialien, beispielsweise auf Basis von Aramiden, signifikante Vorteile aufweist. So weist das erfindungsgemäß zur Ausbildung des weichballistischen Abschnitts 4 eingesetzte Polyethylen mit ultrahohem Molekulargewicht in Form von Garnen bzw. Zwirnen bzw. Fäden eine sehr hohe Zugfestigkeit sowie eine hohe Zähigkeit, eine hohe Bruch- bzw. Biegefestigkeit und ein sehr hohes E-Modul auf. Zudem ist UHMW-PE feuchtigkeits- und UVbeständig, was gleichermaßen dazu führt, dass die erfindungsgemäß eingesetzten Materialien eine hohe Waschbeständigkeit aufweisen, einhergehend mit einer hohen Beständigkeit bzw. Dauerhaftigkeit der ballistischen Schutzfunktion. Zudem sind die eingesetzten Materialien auf Basis von UHMW-PE physiologisch unbedenklich sowie hautfreundlich, so dass beim Tragen der erfindungsgemäßen Schutzbekleidung 8, keine Hautirritationen hervorgerufen werden. Weiterhin weist das eingesetzte Material eine sehr gute Chemikalienbeständigkeit sowie eine hervorragende Bakterienbeständigkeit auf.

Weiterhin kann es erfindungsgemäß vorgesehen sein, dass der weichballistische Abschnitt 4 in Form einer Folie ausgebildet ist.

Was das erfindungsgemäß eingesetzte Schutzmaterial 1 weiterhin anbelangt, so ist es erfindungsgemäß bevorzugt, wenn der hartballistische Abschnitt 2 und der weichballistische Abschnitt 4 ein Verbundmaterial ausbilden. In diesem Zusammenhang kann es erfindungsgemäß vorgesehen sein, dass das Schutzmaterial 1 mehrere, vorzugsweise abwechselnd aufeinander angeordnete, hartballistische Abschnitte 2 und weichballistische Abschnitte 4 aufweist, vorzugsweise zur Ausbildung eines mehrschichtigen Verbundmaterials. Hierzu kann insbesondere auf die in Fig. 1B illustrierte Ausführungsform des erfindungsgemäß eingesetzten Schutzmaterials 1 verwiesen werden.

Die Ausbildung des Schutzmaterials 1 in Form eines mehrschichtigen Verbundmaterials aus abwechselnd übereinander angeordneten hartballistischen Abschnitten 2 und weichballistischen Abschnitten 4 ist prinzipiell mit dem Vorteil verbunden, dass die durch den Wirkkörper eingeleitete Geschossenergie bzw. kinetische Energie besonders effektiv entlang der Dicke des Schutzmaterials 1 sowohl über den hartballistischen Abschnitt 2 verteilt als auch über den weichballistischen Abschnitt 4 aufgenommen bzw. absorbiert wird. In Abhängigkeit zur Anzahl der abwechselnd aufeinander angeordneten hartballistischen Abschnitte 2 und weichballistischen Abschnitte 4 lässt sich somit eine sukzessive bzw. kontinuierliche Erhöhung der ballistischen Schutzfunktion gegenüber bewehrungsdurchdringenden und/oder panzerbrechenden Wirkkörpern realisieren, einhergehend mit einer gleichzeitigen Verbesserung der Stoßabsorption bzw. Reduzierung des an die betroffene Person weitergeleiteten stumpfen Traumas.

Erfindungsgemäß kann also das Schutzmaterial 1 bevorzugt mehrere weichballistische Abschnitte (5) aufweisen, wobei diese gleich oder verschieden voneinander ausgebildet sein können.

Darüber hinaus kann es erfindungsgemäß vorgesehen sein, dass das Schutzmaterial 1 außerdem mindestens einen Abdeckabschnitt 5, bevorzugt in Form eines textilen Flächenmaterials, aufweist und/oder dass das Schutzmaterial 1 zusätzlich zum hartballistischen Abschnitt 2 und dem gegebenenfalls vorhandenen weichballistischen Abschnitt 4 mindestens einen Abdeckabschnitt 5, bevorzugt in Form eines textilen Flächenmaterials, aufweist. Der Abdeckabschnitt 5 kann schichtartig, insbesondere mit zwei gegenüberliegenden Seiten, aufgebaut sein. Insbesondere sind sowohl der Abdeckabschnitt 5 als auch der hartballistische Abschnitt 2 jeweils schichtartig, insbesondere jeweils mit zwei gegenüberliegenden Seiten, aufgebaut, insbesondere wobei der Abdeckabschnitt 5 im Schutzmaterial 1 derart angeordnet ist, dass im Gebrauchszustand (Verwendungszustand) und/oder Tragezustand, der Abdeckabschnitt 5 keiner unmittelbaren Einwirkung ballistischer Wirkkörper ausgesetzt ist und/oder dass der hartballistische Abschnitt 2 einer unmittelbaren Einwirkung ballistischer Wirkkörper ausgesetzt ist.

Insbesondere bildet der hartballistische Abschnitt 2 vorzugsweise zusammen mit dem Abdeckabschnitt 5 sowie dem gegebenenfalls vorhandenen weichballistischen Abschnitt 4 ein Verbundmaterial.

Gemäß den in Fig. 1A und 1B gezeigten Ausführungsformen ist es erfindungsgemäß bevorzugt, dass das Schutzmaterial 1 zwei Abdeckabschnitte 5 aufweist, die an gegenüberliegenden Seiten des Schutzmaterials 1 angeordnet sind.

In diesem Zusammenhang können die schichtweise übereinander angeordneten Abschnitte 2, 4 und 5 lose aufeinander anliegend und/oder lösbar miteinander verbunden sein. Erfindungsgemäß ist es jedoch bevorzugt, wenn der Abdeckabschnitt 5 mit dem übrigen Schutzmaterial 1, insbesondere mit dem oder den an den Abdeckabschnitt 5 angrenzenden Abschnitten 2, 4 verbunden ist, insbesondere dauerhaft verbunden ist, vorzugsweise durch Verkleben, Verheften, Vernähen oder dergleichen.

Im Rahmen der vorliegenden Erfindung hat es sich als vorteilhaft erwiesen, wenn der Abdeckabschnitt 5 feuerbeständig und/oder flammbeständig ausgebildet ist. Des Weiteren kann es erfindungsgemäß vorteilhaft sein, wenn der Abdeckabschnitt 5 antimikrobielle bzw. antibakterielle Eigenschaften und/oder entsprechende Tarneigenschaften aufweist, wobei die in Rede stehenden Materialien gleichermaßen über eine hohe Hydrophilie zur Verbesserung des Abtransports von Flüssigkeit verfügen können, was den Tragekomfort weiterführend verbessert.

Der Abdeckabschnitt 5 kann dabei mindestens ein Material, insbesondere in Form eines Garns, eines Zwirns und/oder eines Fadens, aus der Gruppe von Naturstoffen und Synthetikstoffen, vorzugsweise aus der Gruppe von Baumwolle; Wolle; Leinen; Polyestern; Polyolefinen; Polyvinylchlorid; Polyvinylidenchlorid; Acetat; Triacetat; Polyacryl; Polyamid; Polyvinylalkohol; Polyurethan; Polyvinylestern sowie deren Mischung, aufweisen.

In diesem Zusammenhang kann das Abdeckmaterial 5 gewissermaßen als Obermaterial fungieren, wobei diesbezüglich spezielle Eigenschaften bereitgestellt werden können, wie die zuvor angeführten feuerbeständigen bzw. flammbeständigen Eigenschaften. Zudem kann das Material optisch individuell gestaltet werden, beispielsweise im Zusammenhang mit der Bereitstellung einer Tarnfunktion. Der Abdeckabschnitt 5 kann gleichermaßen antimikrobielle, insbesondere antibakterielle, Eigenschaften aufweisen.

In Bezug auf die in Fig. 1A und 1B gezeigten Ausführungsbeispiele ist es jedoch zusätzlich möglich, den Abdeckabschnitt 5 gewissermaßen als Obermaterial und/oder im Tragezustand an einer dem Träger zugewandten Seite am Schutzmaterial 1 anzuordnen.

In diesem Zusammenhang kann es erfindungsgemäß vorgesehen sein, dass der Abdeckabschnitt 5 aus einem Material in Form eines Polyethylens mit ultrahohem Molekulargewicht (*Ultra High Molecular Weight Polyolefins* bzw. UHMW-PO) hergestellt ist. In diesem Zusammenhang sei ergänzend auf die Ausführungen hinsichtlich des bevorzugten Materials im Zusammenhang mit dem weichballistischen Abschnitt 5 verwiesen. Der Einsatz von Materialien auf Basis von UHMW-PE bietet insbesondere den Vorteil, dass derartige Materialien physiologisch unbedenklich sowie hautfreundlich sind, so dass beim Tragen des erfindungsgemäß eingesetzten Schutzmaterials 1 keine Hautirritationen hervorgerufen werden. Weiterhin weist das eingesetzte Material eine sehr gute Chemikalienbeständigkeit sowie eine hervorragende Bakterienbeständigkeit auf. Insbesondere kann es im Rahmen der vorliegenden Erfindung zweckmäßig sein, dass die Formkörper 3 des hartballistischen Abschnitts 2 mittels eines, insbesondere punktförmig, aufgetragenen Bindemittels an dem weichballistischen Abschnitt 4 und/oder dem Abdeckabschnitt 5 fixiert sind.

Was die Verbindung der Formkörper 3 untereinander mittels des Bindemittels anbelangt, so kann es erfindungsgemäß vorgesehen sein, dass das Bindemittel zur Verbindung der Formkörper 3 im Bereich der gemeinsamen Kontaktbereiche der Formkörper 3 zueinander angeordnet ist. Gemäß einer alternativen Ausführungsform ist es jedoch auch möglich, dass das Bindemittel zur Verbindung der Formkörper 3 innerhalb der zwischen den Formkörpern 3 gebildeten Hohlräume bzw. Leervolumina angeordnet ist und/oder diese zumindest im Wesentlichen ausfüllt.

Zur Ausbildung des erfindungsgemäß eingesetzten Schutzmaterials 1 kann es zudem vorgesehen sein, dass das Schutzmaterial 1 zusätzlich mindestens einen Adsorptionsabschnitt 6, insbesondere mit Schutzfunktion gegenüber chemischen und/oder biologischen Gift- oder Kampfstoffen, vorzugsweise in Form von Aktivkohleteilchen, insbesondere in Form von Kornform (Kornkohle) oder Kugelform (Kugelkohle), aufweist.

In diesem Zusammenhang ist es im Sinne der vorliegenden Erfindung bevorzugt, wenn der Adsorptionsabschnitt 6 schichtartig, insbesondere mit zwei gegenüberliegenden Seiten, aufgebaut ist.

In diesem Zusammenhang ist es insbesondere bevorzugt, wenn der Adsorptionsabschnitt 6 und der hartballistische Abschnitt 2 jeweils schichtartig, insbesondere jeweils mit zwei gegenüberliegenden Seiten, aufgebaut sind, insbesondere wobei der Adsorptionsabschnitt 6 derart innerhalb des Schutzmaterials 1 angeordnet ist, dass im Gebrauchszustand (Verwendungszustand und/oder Tragezustand) der Adsorptionsabschnitt 6 keiner unmittelbaren Einwirkung ballistischer Wirkkörper ausgesetzt ist und/oder dass, vorzugsweise ausschließlich, der hartballistische Abschnitt 2 einer unmittelbaren Einwirkung der ballistischen Wirkkörper ausgesetzt ist.

Insbesondere bildet der Adsorptionsabschnitt 6 zusammen mit dem hartballistischen Abschnitt 2 und dem gegebenenfalls vorhandenen Abdeckabschnitt 5 sowie dem gegebenenfalls vorhandenen weichballistischen Abschnitt 4 ein Verbundmaterial aus.

Hierbei kann es erfindungsgemäß vorgesehen sein, wenn das Schutzmaterial 1 mehrere Adsorptionsabschnitte 6 aufweist, vorzugsweise zur Ausbildung eines mehrschichtigen Verbundmaterials.

Was die Verbindung des Adsorptionsabschnitts 6 mit dem übrigen Schutzmaterial 1, insbesondere mit dem oder den an den Adsorptionsabschnitt 6 angrenzenden Abschnitten 2, 4, 5 anbelangt, so ist es erfindungsgemäß bevorzugt, wenn der Adsorptionsabschnitt 6 dauerhaft mit den angrenzenden Abschnitten 2, 4, 5 verbunden ist, vorzugsweise durch Verkleben, Verheften, Vernähen oder dergleichen.

Zudem ist es im Rahmen der vorliegenden Erfindung bevorzugt, wenn der Gewichtsanteil der Formkörper 3, bezogen auf das Gesamtgewicht des Schutzmaterials 1, im Bereich von 15 Gew.-% bis 98 Gew.-%, vorzugsweise 25 Gew.-% bis 95 Gew.-%, besonders bevorzugt 30 Gew.-% bis 90 Gew.-%, liegt.

Was das Schutzmaterial 1 im Allgemeinen anbelangt, so sollte dieses zumindest partiell verformbar und/oder biegbar und/oder dehnbar ausgebildet sein, insbesondere zumindest partiell elastisch und/oder reversibel verformbar und/oder biegbar und/oder dehnbar. Dies gestattet eine flexible und/oder individuelle Anpassung an die Geometrie hinsichtlich eines zugeordneten bzw. zu schützenden Bereichs, insbesondere Körperbereichs.

Was den durch das Schutzmaterial 1 und/oder den hartballistischen Abschnitt 2 realisierbaren ballistischen Schutz anbelangt, so ist es erfindungsgemäß vorgesehen, dass das Schutzmaterial 1 und/oder der hartballistische Abschnitt 2 mindestens gegenüber der Prüfstufe 9 gemäß VPAM-APR 2006 durchschusshemmend ausgebildet ist und/oder mindestens eine ballistische Schutzfunktion der Prüfstufe 9 gemäß VPAM-APR 2006 erfüllt.

Die erfindungsgemäß angegebene Prüfstufe 9 gemäß VPAM-APR 2006 bezieht sich dabei insbesondere auf eine Bestimmung unter Verwendung von Projektilen mit dem Kaliber 308 Winchester mit einem Stahlvollmantel (FMJ), einem Spitzkopf (PB) und einem Stahlhartkern (HC) vom Hersteller FN Herstal, Belgien sowie Metallwerk Elisenhütte Nassau, Germany vom Typ P80 mit einer Geschossmasse von (9,70 ± 0,2) g, einer Zielgeschwindigkeit von (820 ± 10) m/s, einer Dralllänge von (254 ± 5) %/mm und einer Rohrlänge von (650 ± 3) mm. Die gemäß VPAM-APR 2006 angeführte Prüfung wird insbesondere bei einer Temperatur von (20 ± 3) °C und insbesondere bei einer relativen Luftfeuchtigkeit von (65 ± 4) % durchgeführt. Als Waffenart wird eine Langwaffe verwendet.

Vorzugsweise weist das Schutzmaterial 1 und/oder der hartballistische Abschnitt 2 einen Grenzwert V₅₀, bestimmt nach VPAM-KNB, von mindestens 500 m/s, insbesondere mindestens 600 m/s, vorzugsweise mindestens 700 m/s, bevorzugt mindestens 800 m/s, besonders bevorzugt mindestens 850 m/s, ganz besonders bevorzugt mindestens 900 m/s, auf und/oder einen ballistischen Grenzwert V₅₀, bestimmt nach VPAM-KNB, im Bereich von 500 m/s bis 1.000 m/s, insbesondere 600 m/s bis 980 m/s, vorzugsweise 700 m/s bis 960 m/s, besonders bevorzugt 800 m/s bis 940 m/s auf.

Die erfindungsgemäß angegebenen ballistischen Grenzwerte V₅₀, bestimmt gemäß VPAM-KNB, beziehen sich dabei insbesondere auf eine Bestimmung unter Verwendung von Projektilen in Form von FMJ (Stahlvollmantel) mit einem Projektilgewicht von (9,7 ± 0,2) g. Die gemäß VPAM-APR 2006 angeführten ballistischen Grenzwerte V₅₀ werden insbesondere bei einer Temperatur von (20 ± 2) °C und insbesondere bei einer relativen Luftfeuchtigkeit von (65 ± 4) % bestimmt.

Der ballistische Grenzwert V₅₀ bezieht sich dabei insbesondere auf die Geschwindigkeit (m/s) eines ballistischen Wirkkörpers, bei welcher unter Verwendung eines definierten Projektils und ausgewählten Testmaterials eine Wahrscheinlichkeit einer durch das Projektil hervorgerufenen Perforation bzw. Penetration des Materials von 0,5 (mit 1 gleich maximale Wahrscheinlichkeit) bzw. von 50 % vorliegt. Für weitere Ausführungen kann auf die entsprechende Norm gemäß VPAM-KNB verwiesen werden.

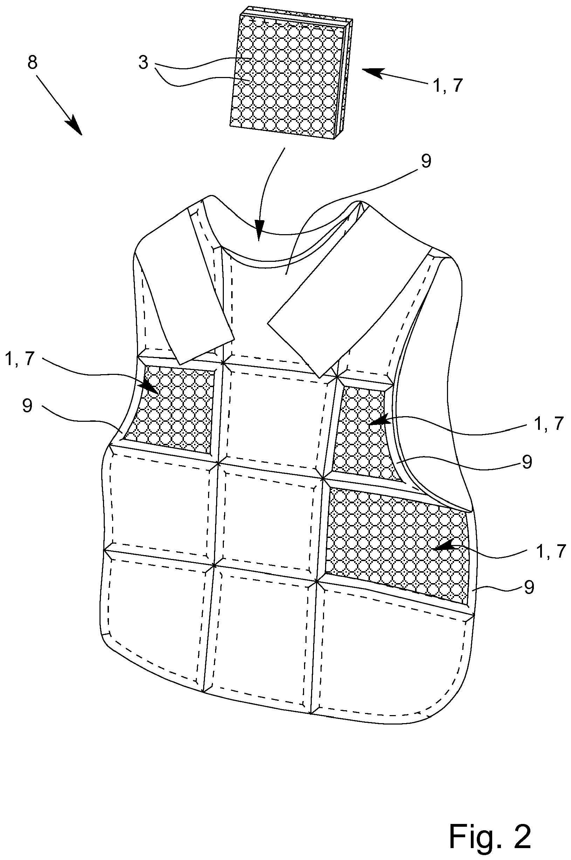

Fig. 2 zeigt ein erfindungsgemäß beschriebenes Schutzelement 7, vorzugsweise ballistisches Schutzelement, insbesondere mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, vorzugsweise in Form einer ballistischen Schutzplatte, insbesondere eines ballistischen Panzerungsbauteils, besonders bevorzugt einer ballistischen und/oder beschusshemmenden Verbundpanzerplatte.

Dabei weist das ballistische Schutzelement 7 eine Vielzahl von ballistischen und/oder beschusshemmenden, vorzugsweise zumindest im Wesentlichen kugelförmigen Formkörpern 3, bevorzugt Panzerungsformkörpern, insbesondere zum Absorbieren und/oder Ableiten und/oder Verteilen kinetischer Energie von ballistischen Wirkkörpern (Wurfkörpern), insbesondere bewehrungsdurchdringenden und/oder panzerbrechenden Geschossen, Schubkörpern oder Eindringkörpern, auf oder ist zumindest im Wesentlichen hieraus gebildet.

Insbesondere ist das Schutzelement 7 im Gebrauchszustand (Verwendungszustand) und/oder Tragezustand einem Bereich, vorzugsweise Körperbereich, zugeordnet und/oder bedeckt im Gebrauchszustand (Verwendungszustand) und/oder Tragezustand einen Bereich, insbesondere Körperbereich, wie schematisch in Fig. 2 dargestellt.

Für weitergehende Einzelheiten und Ausführungen bezüglich des erfindungsgemäß beschriebenen Schutzelements 7 kann auf die voranstehenden Ausführungen im Zusammenhang mit dem erfindungsgemäß eingesetzten Schutzmaterial 1, insbesondere dem hartballistischen Abschnitt 2 und/oder den Formkörpern 3, verwiesen werden, welche in Bezug auf das erfindungsgemäß beschriebene Schutzelement 7 entsprechend gelten.

Weiterhin ist in Fig. 2 die erfindungsgemäße ballistische Schutzoberbekleidung 8 insbesondere in Form einer ballistischen und/oder beschusshemmenden Schutzweste oder -jacke, bevorzugt mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, dargestellt. Dabei ist die Schutzoberbekleidung 8 unter Verwendung mindestens eines Schutzmaterials 1 und/oder mindestens eines Schutzelements 7 hergestellt bzw. weist mindestens ein Schutzmaterial 1 und/oder mindestens ein Schutzelement 7 auf.

Für weitergehende Einzelheiten und Ausführungen bezüglich des erfindungsgemäß eingesetzten Schutzelements 7 und/oder Schutzmaterials 1 kann auf die voranstehenden Ausführungen im Zusammenhang mit dem erfindungsgemäß eingesetzten Schutzmaterial 1 und/oder Schutzelement 7, insbesondere dem hartballistischen Abschnitt 2 und/oder den Formkörpern 3, verwiesen werden, welche in Bezug auf das erfindungsgemäß eingesetzte Schutzelement 7 und/oder Schutzmaterial 1 entsprechend gelten.

Gemäß einer bevorzugten Ausführungsform kann es zudem vorgesehen sein, dass mehrere Schutzelemente 7, unabhängig voneinander, lösbar bzw. herausnehmbar bzw. abnehmbar mit der Schutzoberbekleidung 8 verbunden sind. In diesem Zusammenhang können die Schutzelemente 7, unabhängig voneinander, in Aufnahmevorrichtungen 9, insbesondere Aufnahmetaschen, der Schutzoberbekleidung 8 anbringbar bzw. einbringbar sein. In diesem Zusammenhang kann die Befestigung der Schutzelemente 7 an der Schutzoberbekleidung 8 beispielsweise durch Aufnahme bzw. Integration in die Aufnahmevorrichtung 9 bzw. durch zusätzliche Befestigungsmittel, wie Klettverschlüsse, Reißverschlüsse oder dergleichen, erfolgen. Was die Aufnahmevorrichtungen 9, insbesondere Aufnahmetaschen, anbelangt, so können diese aus einem insbesondere netzartigen textilen Flächenmaterial ausgebildet sein, wobei diesbezüglich dem Fachmann an sich bekannte Netzwaren bzw. Netzstoffe eingesetzt werden können.

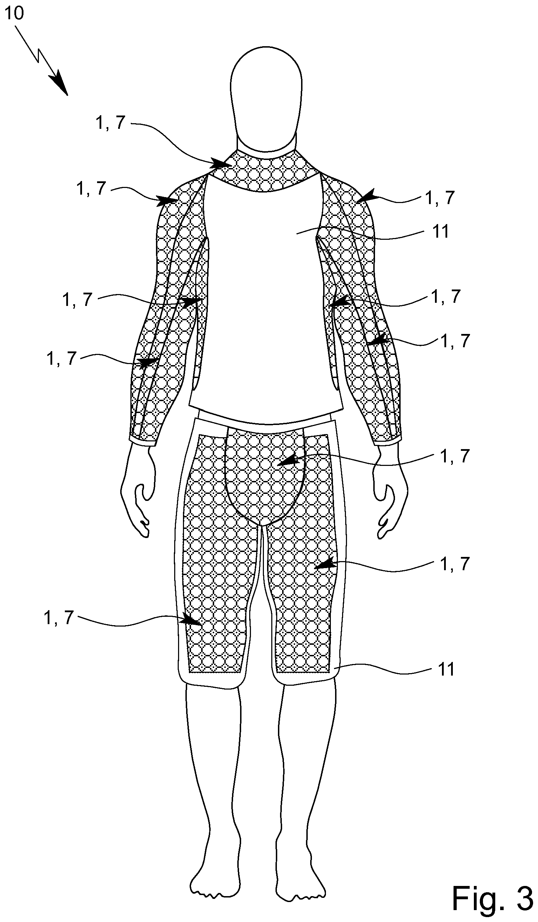

Fig. 3 illustriert eine Schutzbekleidungseinheit 10 im Sinne der vorliegenden Erfindung.

Erfindungsgemäß ist die Schutzbekleidungseinheit 10 als ballistische Schutzbekleidungseinheit mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, mit Oberbekleidung und/der Unterbekleidung sowie gegebenenfalls mit separatem Kopf- und/oder Gesichtsschutz, Halsschutz, Schulterschutz, Armschutz, Handschutz, Rumpfschutz, Torsoschutz, Genital- und/oder Analschutz und/oder Beinschutz ausgebildet.

Insbesondere weist die Schutzbekleidungseinheit 10 voneinander verschiedene, im Tragezustand unterschiedlichen Körperbereichen zugeordnete und/oder im Tragezustand unterschiedliche Körperbereiche bedeckende, Schutzmaterialien 1 und/oder Schutzelemente 7 auf.

Für weitergehende Einzelheiten und Ausführungen bezüglich des erfindungsgemäß eingesetzten Schutzelements 7 und/oder Schutzmaterials 1 kann auf die voranstehenden Ausführungen im Zusammenhang mit dem erfindungsgemäß eingesetzten Schutzmaterial 1 und/oder Schutzelement 7, insbesondere dem hartballistischen Abschnitt 2 und/oder den Formkörpern 3 verwiesen werden, welche in Bezug auf das erfindungsgemäß eingesetzte Schutzelement 7 und/oder Schutzmaterial 1 entsprechend gelten.

Auf Basis der erfindungsgemäßen Konzeption kann mit der erfindungsgemäßen Schutzbekleidungseinheit 10 die in Fig. 2 dargestellte erfindungsgemäße Schutzoberbekleidung 8, insbesondere ballistische Schutzweste, in gezielter Weise hinsichtlich der ballistischen Schutzfunktion funktional ergänzt bzw. ausgerüstet werden.

Die vorliegende Erfindung betrifft somit im Speziellen auch eine Schutzbekleidungseinheit 10, welche die erfindungsgemäße Schutzoberbekleidung 8 umfasst, und zusätzlich mit weiteren Schutzmaterialien ergänzt bzw. kombiniert ist (beispielsweise in Form eines Halsschutzes, Schulterschutzes, Armschutzes, Rumpfschutzes und Beinschutzes gemäß Fig. 3), welche jeweils mit einem entsprechenden Schutzmaterial 1 und/oder Schutzelement 7 ausgerüstet sind bzw. welche mit zusätzlichen ballistischen Schutzfunktionen zur Ausbildung der erfindungsgemäßen Schutzbekleidungseinheit 10 kombiniert werden können.

Erfindungsgemäß ist es in diesem Zusammenhang bevorzugt, wenn die Schutzbekleidungseinheit 10 mindestens ein textiles Flächenmaterial 11 aufweist. In diesem Zusammenhang kann es erfindungsgemäß vorgesehen sein, dass das textile Flächenmaterial 11 mit den Schutzelementen 7 und/oder Schutzmaterialien 1 eine insbesondere einlagige bzw. einschichtige (Grundfläche) der Schutzbekleidungseinheit 10 ausbildet. Gleichermaßen kann es vorgesehen sein, dass das textile Flächenmaterial 11 insbesondere jeweils randseitig, vorzugsweise randseitig überlappend mit den Schutzelementen 7 und/oder Schutzmaterialien 1 verbunden, insbesondere vernäht, ist. In entsprechender Weise können einzelne Elemente des Flächenmaterials 11 auch untereinander verbunden sein.

Das Flächenmaterial 11 kann somit vorzugsweise mit den jeweiligen Schutzelementen 7 in einer gemeinsamen Ebene angeordnet sein bzw. bildet mit den entsprechenden Schutzelementen 7 eine geschlossene Fläche aus. In diesem Zusammenhang sind die Schutzelemente 7, unabhängig voneinander, und das Flächenmaterial 11 insbesondere abschnittsweise miteinander verbunden, beispielsweise mittels Vernähen, insbesondere auf Basis von Flachnähten.

In diesem Zusammenhang kann das Flächenmaterial 11 insbesondere derart in der Schutzbekleidungseinheit 10 nach der Erfindung angeordnet sein, dass physiologisch weniger relevante bzw. ein geringeres Verletzungsrisiko aufweisende Körperabschnitte bzw. -bereiche im Tragezustand von dem Flächenmaterial 11 bedeckt sind. Beispielsweise können im Tragezustand solche Körperregionen bzw. Abschnitte von dem weiteren Flächenmaterial 11 bedeckt sein, für die bereits ein (korrespondierender) Schutz durch externe Schutzvorrichtungen, wie die in Fig. 2 dargestellte Schutzoberbekleidung 8, insbesondere ballistische Schutzweste, vorliegt, so dass erfindungsgemäß in Bezug auf bereits bestehende Schutzsysteme ein ergänzender Schutz durch spezielle Anordnung von Schutzelementen 7 einerseits und dem mindestens weiteren textilen Flächenmaterial 11 andererseits realisiert werden kann.

Durch den Einsatz des textilen Flächenmaterials 11 kann zum einen der Tragekomfort, insbesondere bedingt durch eine hohe Luftdurchlässigkeit des zugrundeliegenden Materials, und/oder eine weiterführende Verbesserung der Passform der erfindungsgemäßen Schutzbekleidungseinheit 10, insbesondere bedingt durch die Ausbildung elastischer Eigenschaften in Bezug auf das weitere textile Flächenmaterial 11, erreicht werden. Beispielsweise kann das textile Flächenmaterial 11 innerhalb der Schutzbekleidungseinheit 10 für den Fall eines Unter- bzw. Oberziehhemdes auch im Bereich der rückseitigen Arme oder für den Fall einer Unterziehhose im Bereich der äußeren Ober- bzw. Unterschenkel sowie im Bereich des äußeren Knies angeordnet sein. Insbesondere bei elastischer bzw. reversibel dehnbarer Ausbildung des textilen Flächenmaterials 11 kann hierdurch die Körperpassform, insbesondere ein nahes Anliegen der Schutzbekleidungseinheit 10 im Tragezustand, realisiert werden.

Zudem sollte das textile Flächenmaterial 11 elastisch bzw. reversibel dehnbar ausgebildet sein. Erfindungsgemäß kann es hierzu vorgesehen sein, dass das textile Flächenmaterial 11 mindestens ein elastisches und/oder reversibel dehnbares Garn bzw. eine entsprechende Faser und/oder mindestens einen elastischen und/oder reversibel dehnbaren Zwirn bzw. Faden aufweist, insbesondere auf Basis eines synthetischen Polymermaterials.

Weiterhin wird auch die Verwendung eines Schutzmaterials 1 bzw. Schutzelements 7, wie jeweils zuvor beschrieben, zur Herstellung von Schutzbekleidungen aller Art, vorzugsweise mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, insbesondere unter Erfüllung einer durchschusshemmenden Ausbildung mindestens gemäß Prüfstufe 9 der Allgemeinen Prüfungsgrundlagen für ballistische Material-, Konstruktions- und Produktprüfungen der Vereinigung der Prüfstellen für angriffshemmende Materialien und Konstruktionen (VPAM-APR 2006), beschrieben. Für weitergehende Einzelheiten zu diesem Aspekt kann zur Vermeidung unnötiger Wiederholungen auf die obigen Ausführungen zu den übrigen Aspekten verwiesen werden, welche für diesen Aspekt entsprechend gelten.

Zudem wird die Verwendung mindestens eines Schutzmaterials 1 bzw. Schutzelements 7, wie jeweils zuvor beschrieben, zur Ausrüstung von Bekleidung mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, beschrieben, insbesondere wobei sich das mindestens eine Schutzmaterial 1 bzw. Schutzelement 7 im Gebrauchszustand (Verwendungszustand) und/oder Tragezustand einem zu schützenden Bereich, insbesondere Körperbereich, zugeordnet ist, vorzugsweise sich über einen Bereich, insbesondere Körperbereich, erstreckt und/oder einen Bereich, insbesondere Körperbereich, zumindest teilweise bedeckt. Für weitergehende Einzelheiten zu diesem Aspekt kann zur Vermeidung unnötiger Wiederholungen auf die obigen Ausführungen zu den übrigen Aspekten verwiesen werden, welche für diesen Aspekt entsprechend gelten.

Zudem wird die Verwendung mindestens eines Schutzmaterials 1 und/oder mindestens eines Schutzelements 7 (vorzugsweise eines plattenförmigen ballistischen Schutzelements, insbesondere ballistischen Panzerungsbauteils, besonders bevorzugt einer ballistischen und/oder beschusshemmenden Verbundpanzerplatte), wie jeweils zuvor beschrieben, zur Herstellung von Fahrzeugen aller Art, insbesondere Pkw, Lkw, Nutzfahrzeugen, Landfahrzeugen oder dergleichen, vorzugsweise mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, beschrieben. Für weitergehende Einzelheiten zu diesem Aspekt kann zur Vermeidung unnötiger Wiederholungen auf die obigen Ausführungen zu den übrigen Aspekten verwiesen werden, welche für diesen Aspekt entsprechend gelten.

Darüber hinaus wird auch die Verwendung mindestens eines Schutzmaterials 1 und/oder mindestens eines Schutzelements 7 (vorzugsweise eines plattenförmigen ballistischen Schutzelements, insbesondere ballistischen Panzerungsbauteils, besonders bevorzugt einer ballistischen und/oder beschusshemmenden Verbundpanzerplatte), wie jeweils zuvor beschrieben, zur Ausrüstung von Fahrzeugen aller Art, insbesondere Pkw, Lkw, Nutzfahrzeugen, Landfahrzeugen oder dergleichen, mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, beschrieben. Für weitergehende Einzelheiten zu diesem Aspekt kann zur Vermeidung unnötiger Wiederholungen auf die obigen Ausführungen zu den übrigen Aspekten verwiesen werden, welche für diesen Aspekt entsprechend gelten.

Zudem wird auch die Verwendung mindestens eines Schutzmaterials 1 und/oder mindestens eines Schutzelements 7 (vorzugsweise eines plattenförmigen ballistischen Schutzelements, insbesondere ballistischen Panzerungsbauteils, besonders bevorzugt einer ballistischen und/oder beschusshemmenden Verbundpanzerplatte), wie jeweils zuvor beschrieben, zur Herstellung von Objekten oder Gebäuden aller Art, vorzugsweise mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, beschrieben. Für weitergehende Einzelheiten zu diesem Aspekt kann zur Vermeidung unnötiger Wiederholungen auf die obigen Ausführungen zu den übrigen Aspekten verwiesen werden, welche für diesen Aspekt entsprechend gelten.

Des Weiteren wird ebenfalls die Verwendung mindestens eines Schutzmaterials 1 und/oder mindestens eines Schutzelements 7 (vorzugsweise eines plattenförmigen ballistischen Schutzelements, insbesondere ballistischen Panzerungsbauteils, besonders bevorzugt einer ballistischen und/oder beschusshemmenden Verbundpanzerplatte), wie jeweils zuvor beschrieben, zur Ausrüstung von Objekten oder Gebäuden aller Art mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, beschrieben. Für weitergehende Einzelheiten zu diesem Aspekt kann zur Vermeidung unnötiger Wiederholungen auf die obigen Ausführungen zu den übrigen Aspekten verwiesen werden, welche für diesen Aspekt entsprechend gelten.

Zudem werden auch Fahrzeuge aller Art, insbesondere Pkw, Lkw, Nutzfahrzeuge, Landfahrzeuge oder dergleichen, bevorzugt mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, beschrieben, wobei die Fahrzeuge hergestellt sind unter Verwendung mindestens eines wie zuvor beschriebenen Schutzmaterials 1 und/oder mindestens eines wie zuvor beschriebenen Schutzelements 7 (vorzugsweise eines plattenförmigen ballistischen Schutzelements, insbesondere ballistischen Panzerungsbauteils, besonders bevorzugt einer ballistischen und/oder beschusshemmenden Verbundpanzerplatte) bzw. wobei die Fahrzeuge mindestens ein wie zuvor beschriebenes Schutzmaterial 1 und/oder mindestens ein wie zuvor beschriebenes Schutzelement 7 (vorzugsweise ein plattenförmiges ballistisches Schutzelement, insbesondere ballistisches Panzerungsbauteils, besonders bevorzugt eine ballistische und/oder beschusshemmende Verbundpanzerplatte) aufweisen. Für weitergehende Einzelheiten zu diesem Aspekt kann zur Vermeidung unnötiger Wiederholungen auf die obigen Ausführungen zu den übrigen Aspekten verwiesen werden, welche für diesen Aspekt entsprechend gelten.

Des Weiteren werden Objekte oder Gebäude aller Art, bevorzugt mit Schutzfunktion gegenüber ballistischen Wirkkörpern (Wurfkörpern), insbesondere gegenüber bewehrungsdurchdringenden und/oder panzerbrechenden Geschossen, Schubkörpern oder Eindringkörpern, beschrieben, wobei die Objekte oder Gebäude hergestellt sind unter Verwendung mindestens eines wie zuvor beschriebenen Schutzmaterials 1 und/oder mindestens eines wie zuvor beschriebenen Schutzelements 7 (vorzugsweise eines plattenförmigen ballistischen Schutzelements, insbesondere ballistischen Panzerungsbauteils, besonders bevorzugt einer ballistischen und/oder beschusshemmenden Verbundpanzerplatte) bzw. wobei die Objekte oder Gebäude mindestens ein wie zuvor beschriebenes Schutzmaterial 1 und/oder mindestens ein wie zuvor beschriebenes Schutzelement 7 (vorzugsweise ein plattenförmiges ballistisches Schutzelement, insbesondere ballistisches Panzerungsbauteils, besonders bevorzugt eine ballistische und/oder beschusshemmende Verbundpanzerplatte) aufweisen. Für weitergehende Einzelheiten zu diesem Aspekt kann zur Vermeidung unnötiger Wiederholungen auf die obigen Ausführungen zu den übrigen Aspekten verwiesen werden, welche für diesen Aspekt entsprechend gelten.

Schließlich wird auch ein Verfahren zur Bereitstellung eines Schutzes, vorzugsweise von Personen, gegenüber ballistischen Wirkkörpern (Wurfkörpern), insbesondere gegenüber bewehrungsdurchdringenden und/oder panzerbrechenden Geschossen, Schubkörpern oder Eindringkörpern, beschrieben,
wobei ein Schutzmaterial 1 bzw. Schutzelement 7, wie jeweils zuvor beschrieben, einer Einwirkung gegenüber den ballistischen Wirkkörpern (Wurfkörpern), insbesondere einem Auftreffen und/oder Aufschlagen und/oder Einschlagen, ausgesetzt wird, so dass über die Vielzahl von ballistischen und/oder beschusshemmenden Formkörpern 3 die kinetische Energie der ballistischen Wirkkörper (Wurfkörper) absorbiert und/oder abgeleitet und/oder verteilt wird.

Für weitergehende Einzelheiten zu diesem Aspekt (d. h. dem beschriebenen Verfahren) kann zur Vermeidung unnötiger Wiederholungen auf die obigen Ausführungen zu den übrigen Aspekten verwiesen werden, welche für diesen Aspekt entsprechend gelten.

Weitere Ausgestaltungen, Abwandlungen, Variationen. Modifikationen, Besonderheiten und Vorteile der vorliegenden Erfindung sind für den Fachmann beim Lesen der Beschreibung ohne weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

### 1. Herstellung des erfindungsgemäßen Schutzmaterials

(i) Zur Herstellung eines plattenförmigen Schutzmaterials mit einer Länge von 310 mm, einer Breite von 290 mm sowie einer Höhe von 17,6 mm werden zur Bereitstellung einer hartballistischen Schutzfunktion zunächst zwei Kugellagen bestehend aus jeweils kugelförmigen und ballistisch beständigen Formkörpern mit einem Durchmesser von je 10 mm in einer Ebene dichtest aneinander bzw. unter Minimierung der zwischen den Formkörpern gebildeten bzw. eingeschlossenen Leervolumina angeordnet und stoffschlüssig miteinander verbunden. Anschließend werden die zusammenhängenden ebenen Kugellagen dichtest aufeinander bzw. unter Minimierung der zwischen den Lagen der Formkörper gebildeten Leervolumina gestapelt und ebenfalls stoffschlüssig miteinander verbunden. Die stoffschlüssige Verbindung der kugelförmigen Formkörper untereinander wird durch ein reaktives Epoxidharz realisiert. Die kugelförmigen Formkörper sind zumindest im Wesentlichen aus einem Keramikwerkstoff auf Basis von Aluminiumoxid hergestellt.
(ii) Weiterhin ist zusätzlich zur hartballistischen Schutzfunktion die Bereitstellung einer weichballistischen (Splitter)-Schutzfunktion vorgesehen, die aus textilen Faserfilamenten, insbesondere auf Basis von Polyolefinen mit ultrahohem Molekulargewicht, besteht und zu einem Gewirke oder Gestricke verarbeitet sind. Bevorzugt ist der hartballistische Abschnitt 2 in den weichballistischen Abschnitt 5 eingeschoben, sodass der weichballistische Abschnitt 5 im Gebrauchszustand eine Umhüllung des hartballistischen Abschnitts 2 bildet.
(iii) Es resultiert somit ein erfindungsgemäßes Schutzmaterial 1 mit einer hartballistischen Schutzfunktion auf Basis der dichtest aneinander angeordneten kugelförmigen Formkörper und einer zusätzlichen weichballistischen (Splitter-)Schutzfunktion auf Basis eines textilen Flächenmaterials.

### 2. Herstellung des erfindungsgemäßen Schutzelements

Für Einzelheiten und Ausführungen bezüglich der Herstellung des Schutzelements in Form einer zweilagigen Verbundpanzerplatte kann auf die unter Ziff. 1. (i) genannten Ausführungen im Zusammenhang mit der Herstellung des erfindungsgemäßen Schutzmaterials verwiesen werden. Folglich unterscheidet sich das Schutzelement vom Schutzmaterial lediglich darin, dass beim Schutzelement im Gegensatz zum Schutzmaterial keine zusätzliche weichballistische Schutzfunktion bereitgestellt wird.

### 3. Prüfung der durchschusshemmenden Ausbildung des Schutzmaterials

### (i) Definition und Prüfbedingungen:

Zur Prüfung der durchschusshemmenden Ausbildung des Schutzmaterials sowie des Schutzelements wird eine ballistische Prüfung gemäß Prüfstufe 9 nach den allgemeinen Prüfungsgrundlagen für ballistische Material-, Konstruktions- und Produktprüfung, herausgegeben von der Vereinigung der Prüfstellen für angriffshemmende Materialien und Konstruktionen (VPAM-APR 2006), durchgeführt.

Unter dem Begriff "Durchschusshemmung" ist dabei der Widerstand eines Materials oder einer Konstruktion zu verstehen, welche dem Durchdringen eines Geschosses unter definierten Bedingungen entgegengesetzt wird.

In diesem Sinne ist ein Material oder eine Konstruktion durchschusshemmend, wenn es einen definierten Widerstand gegen Angriffe mit bestimmten Waffen und Munitionsarten bietet.

Dabei bezeichnet der Begriff "Prüfstufe" eine Klassifizierung eines Widerstands gegen ein bestimmtes Angriffspotential.

Erfüllt ein Material das Kriterium der Durchschusshemmung gemäß Prüfstufe 9, ist es prinzipiell zur Ausrüstung bzw. Herstellung von Schutzwesten der Schutzklasse SK4 geeignet und bietet somit einen Schutz vor Langwaffenmunition mit Vollmantel und Hartkern.

Die Durchführung der ballistischen Prüfung erfolgt gemäß der Prüfrichtlinie "Durchschusshemmende plattenartige Materialien" der Vereinigung der Prüfstellen für angriffshemmende Materialien und Konstruktionen (VPAM-PM 2007).

Zur Prüfung mit standardisierten Munitionsarten gemäß Prüfstufe 9 wird eine Langwaffe vom Kaliber 308 Winchester mit einer Dralllänge von (254 mm ± 5) % und einer Lauflänge von 650 mm verwendet.

Als Munitionsart wird ein Stahlvollmantel mit Spitzkopf und Stahlhartkern bei einem Gewicht von (9,7 ± 0,2) g vom Typ P80 des Herstellers FN Herstal, Belgien bzw. Metallwerk Elisenhütte Nassau, Germany, verwendet.

Die Schussentfernung beträgt (10±0,5) m bei einer Geschossgeschwindigkeit von mindestens 820 ± 10 m/s.

Die Durchführung der ballistischen Prüfung erfolgte bei einer Raumtemperatur von 21 °C und einer relativen Luftfeuchte von 59 %.

Ein zu prüfendes Material erfüllt die ballistischen Anforderungen gemäß Prüfstufe 9, wenn das Material unter den voranstehend definierten Prüfbedingungen durchschusshemmend ist.

### (ii) Prüfungsergebnisse:

Nachfolgend sind die Ergebnisse der ballistischen Prüfung auf Basis der zuvor unter Ziff. 3. (i) genannten Prüfbedingungen für das erfindungsgemäße Schutzmaterial und das erfindungsgemäße Schutzelement zusammengefasst:

| **Nr.** | **Geschw. V(7,50) [m/s]** | **Energie E(7,50) [J]** | **Durchschuss** | **Winkel [Grad]** | **Bemerkung** |
|---|---|---|---|---|---|
| 1 | 835 | 3382 | Nein | 90,0 | gestoppt im Hartschutz |
| 2 | 826 | 3309 | Nein | 90,0 | gestoppt im Hartschutz |
| 3 | 821 | 3269 | Nein | 90,0 | gestoppt im Hartschutz |

Die Ergebnisse zeigen, dass das erfindungsgemäße Schutzmaterial bei allen drei Prüfdurchgängen gegenüber einer Geschossgeschwindigkeit von 820 m/s durchschusshemmend ausgebildet ist und somit die Anforderungen gemäß Prüfstufe 9 in Bezug auf VPAM - APR 2006 erfüllt.

Durch die Bereitstellung einer hartballistischen Schutzfunktion über die Vielzahl separater und zumindest im Wesentlichen kugelförmig ausgebildeter Formkörper kann somit eine signifikante Reduzierung des Gewichts bei einer Durchschusshemmung mindestens gemäß Prüfstufe 9 (VPAM-APR 2006) erreicht werden.

Im Ergebnis zeigen die voranstehenden Ausführungen somit, dass das erfindungsgemäße Schutzmaterial im Vergleich zum Stand der Technik deutlich verbesserte Eigenschaften hinsichtlich des Tragekomforts, insbesondere infolge einer signifikanten Reduzierung des Tragegewichts, aufweist.

Für Einzelheiten und Ausführungen in Bezug auf das erfindungsgemäße Schutzelements kann auf die voranstehenden Ausführungen im Zusammenhang mit dem erfindungsgemäßen Schutzmaterial verwiesen werden.

### Bezugszeichenliste:

- 1: Schutzmaterial
- 2: hartballistischer Abschnitt
- 3: Formkörper
- 4: weichballistischer Abschnitt
- 5: Abdeckabschnitt
- 6: Adsorptionsabschnitt
- 7: Schutzelement
- 8: Schutzoberbekleidung
- 9: Aufnahmevorrichtung
- 10: Schutzbekleidungseinheit
- 11: Flächenmaterial

## Patentansprüche

1. Ballistische Schutzoberbekleidung (8), insbesondere in Form einer ballistischen und/oder beschusshemmenden Schutzweste oder -jacke, aufweisend mindestens ein ballistisches Schutzmaterial (1) mit Schutzfunktion gegenüber ballistischen Wirkkörpern und mit einer Beschussfläche (B),
wobei das Schutzmaterial (1) mindestens einen der Beschussfläche (B) zugeordneten und/oder die Beschussfläche (B) ausbildenden, hartballistischen Abschnitt (2) mit Schutzfunktion gegenüber ballistischen Wirkkörpern aufweist,
wobei der hartballistische Abschnitt (2) einen Splitter- und/oder Ballistikschutzwert V₅₀, bestimmt nach STANAG 2920, von mindestens 180 m/s aufweist,
wobei der hartballistische Abschnitt (2) eine Vielzahl von ballistischen und/oder beschusshemmenden, zumindest im Wesentlichen kugelförmigen Formkörpern (3) zum Absorbieren und/oder Ableiten und/oder Verteilen kinetischer Energie von ballistischen Wirkkörpern aufweist oder hieraus zumindest im Wesentlichen gebildet ist bzw. besteht,
wobei der Volumenanteil der Formkörper (3), bezogen auf das Gesamtvolumen des hartballistischen Abschnitts (2), im Bereich von 20 Vol.-% bis 99 Vol.-% liegt und/oder wobei der Gewichtsanteil der Formkörper (3), bezogen auf das Gesamtgewicht des hartballistischen Abschnitts (2), im Bereich von 20 Gew.-% bis 99 Gew.-% liegt,
wobei die Formkörper (3) und/oder das Material der Formkörper (3) jeweils eine Vickers-Härte von mindestens 1.200 HV, bestimmt gemäß DIN EN ISO 6507, aufweisen und wobei die Formkörper (3) zur Ausbildung eines zusammenhängenden Gefüges in Form eines mehrschichtigen Verbundwerkstoffs mittels Sintern, Löten, Schweißen oder dergleichen und/oder mittels mindestens eines Bindemittels dauerhaft miteinander verbunden sind, wobei das Bindemittel ausgewählt ist aus der Gruppe von (i) anorganischen Bindemitteln; (ii) organischen Bindemitteln; (iii) Polymerwerkstoffen; (iv) Klebstoffen; sowie (v) Mischungen oder Kombinationen der vorgenannten Materialien und wobei das Bindemittel im ausgehärteten Zustand zumindest partiell verformbar ausgebildet ist.

2. Schutzoberbekleidung nach Anspruch 1, **dadurch gekennzeichnet,**
**dass** der hartballistische Abschnitt (2) schichtartig, vorzugsweise flächig, insbesondere mit zwei gegenüberliegenden Seiten ausgebildet ist, insbesondere wobei die Beschussfläche (B) durch eine Seite, vorzugsweise Oberfläche, des hartballistischen Abschnitts (2) ausgebildet ist; und/oder
**dass** die Formkörper (3), insbesondere innerhalb des hartballistischen Abschnitts (2), zumindest im Wesentlichen aneinander anliegend und/oder zumindest im Wesentlichen einander berührend angeordnet sind; und/oder
**dass** die Formkörper (3) derart innerhalb des hartballistischen Abschnitts (2) angeordnet sind, dass die Volumendifferenz zwischen dem Gesamtvolumen des hartballistischen Abschnitts (2) einerseits und der Summe der je einzelnem Formkörper (3) eingenommenen Teilvolumina andererseits zumindest im Wesentlichen minimiert ist, insbesondere weniger als 50 Vol.-%, vorzugsweise weniger als 40 Vol.-%, bevorzugt weniger als 35 Vol.-%, besonders bevorzugt weniger als 30 Vol.-%, des Gesamtvolumens des hartballistischen Abschnitts (2) beträgt; und/oder
**dass** der Volumenanteil der Formkörper (3), bezogen auf das Gesamtvolumen des hartballistischen Abschnitts (2), im Bereich von 30 Vol.-% bis 95 Vol.-%, besonders bevorzugt im Bereich von 40 Vol.-% bis 90 Vol.-%, ganz besonders bevorzugt im Bereich von 50 Vol.-% bis 85 Vol.-%, noch weiter bevorzugt im Bereich von 60 Vol.-% bis 80 Vol.-%, liegt; und/oder
**dass** der Gewichtsanteil der Formkörper (3), bezogen auf das Gesamtgewicht des hartballistischen Abschnitts (2), im Bereich von 30 Gew.-% bis 98 Gew.-%, besonders bevorzugt im Bereich von 40 Gew.-% bis 97 Gew.-%, ganz besonders bevorzugt im Bereich von 50 Gew.-% bis 96 Gew.-%, noch weiter bevorzugt im Bereich von 60 Gew.-% bis 95 Gew.-%, liegt.

3. Schutzoberbekleidung nach Anspruch 1 oder 2, **dadurch gekennzeichnet,**
**dass** die Formkörper (3) zumindest im Wesentlichen die gleiche Größe, vorzugsweise zumindest im Wesentlichen den gleichen Durchmesser, aufweisen; und/oder
**dass** die Formkörper (3) eine Größe, insbesondere einen Durchmesser, im Bereich von 0,1 mm bis 10 cm, vorzugsweise im Bereich von 0,5 mm bis 5 cm, besonders bevorzugt im Bereich von 1 mm bis 4 cm, ganz besonders bevorzugt im Bereich von 2 mm bis 3 cm, noch mehr bevorzugt im Bereich von 5 mm bis 2 cm, aufweisen; und/oder
**dass** die Formkörper (3) hergestellt sind aus einem ballistisch beständigen Hartmaterial, insbesondere aus einem gegenüber ballistischen Wirkkörpern beständigen und/oder undurchdringbaren und/oder durchschusshemmenden Hartmaterial, vorzugsweise ausgewählt aus der Gruppe von (i) Polymerwerkstoffen, vorzugsweise Polyolefinen, wie Polyethylenen oder Polypropylenen, insbesondere schlagfesten und/oder metall- oder faserverstärkten Polymerwerkstoffen, besonders bevorzugt Polyolefinen mit ultrahohem Molekulargewicht; (ii) metallischen Werkstoffen, insbesondere Stahl; (iii) Keramikwerkstoffen; (iv) anorganischen, insbesondere halbmetallischen oder metallischen Carbiden, Nitriden, Siliciden und Oxiden, insbesondere Aluminiumoxiden, Berylliumoxiden, Siliciumoxiden, Siliciumcarbiden, Siliciumnitriden, Borcarbiden und Bornitriden; sowie (v) Mischungen oder Kombinationen der vorgenannten Materialien; und/oder
**dass** die Formkörper (3) hergestellt sind aus einem ballistisch beständigen Hartmaterial, insbesondere aus einem gegenüber ballistischen Wirkkörpern beständigen und/oder undurchdringbaren und/oder durchschusshemmenden Hartmaterial, vorzugsweise ausgewählt aus der Gruppe von (i) metallischen Werkstoffen, insbesondere Stahl; (ii) Keramikwerkstoffen; (iii) anorganischen, insbesondere halbmetallischen oder metallischen Carbiden, Nitriden, Siliciden und Oxiden, insbesondere Aluminiumoxiden, Berylliumoxiden, Siliciumoxiden, Siliciumcarbiden, Siliciumnitriden, Borcarbiden und Bornitriden; sowie (iv) Mischungen oder Kombinationen der vorgenannten Materialien; und/oder
**dass** die Formkörper (3) hergestellt sind aus einem ballistisch beständigen Material, vorzugsweise Hartmaterial, insbesondere aus einem gegenüber ballistischen Wirkkörpern beständigen und/oder undurchdringbaren und/oder durchschusshemmenden Material, vorzugsweise Hartmaterial, insbesondere wobei die Formkörper (3) aus Vollmaterial, insbesondere in Form von Vollkugeln, gebildet sind oder aber wobei die Formkörper (3) als Hohlkörper, insbesondere in Form von Hohlkugeln, gebildet sind oder aber wobei die Formkörper (3) aus geknäuelten und/oder zusammengeballten Fäden oder Filamenten oder Monofilamenten, insbesondere Textilfäden, bevorzugt Metall- oder Polymerwerkstoff-Fäden oder -Filamenten oder Monofilamenten, gebildet sind.

4. Schutzoberbekleidung nach einem der vorhergehenden Ansprüche, **dadurch gekennzeichnet,**
**dass** das Schutzmaterial (1) zusätzlich zum hartballistischen Abschnitt (2) mindestens einen weichballistischen Abschnitt (4) aufweist und/oder dass das Schutzmaterial (1) außerdem mindestens einen weichballistischen Abschnitt (5) aufweist;
insbesondere wobei der weichballistische Abschnitt (4) schichtartig, vorzugsweise flächig, insbesondere mit zwei gegenüberliegenden Seiten, aufgebaut ist; und/oder
insbesondere wobei der weichballistische Abschnitt (4) mit dem hartballistischen Abschnitt (2) verbunden ist, insbesondere dauerhaft verbunden ist, vorzugsweise durch Verkleben, Verheften, Vernähen oder dergleichen; und/oder
insbesondere wobei der weichballistische Abschnitt (4) als ein vorzugsweise textiles Flächengebilde oder als ein vorzugsweise textiles Flächenmaterial, insbesondere als ein Gewebe, Gewirke, Gestricke, Gelege, Vlies oder Nonwoven, ausgebildet ist; und/oder
insbesondere wobei der weichballistische Abschnitt (4) aus Polyparaphenylenterephthalamid-Fasern und/oder Polyethylen-Fasern und/oder Glasfasern besteht; und/oder
insbesondere wobei der weichballistische Abschnitt (4) mindestens ein Polyolefin mit ultrahohem Molekulargewicht, insbesondere mindestens ein Polyethylen mit ultrahohem Molekulargewicht, aufweist oder hieraus besteht, insbesondere in Form von Fasern und/oder Garnen; und/oder
insbesondere wobei der weichballistische Abschnitt (4) in Form einer Folie ausgebildet ist; und/oder
insbesondere wobei der hartballistische Abschnitt (2) und der weichballistische Abschnitt (4) ein Verbundmaterial ausbilden; und/oder
insbesondere wobei das Schutzmaterial (1) mehrere, vorzugsweise abwechselnd aufeinander angeordnete, hartballistische Abschnitte (2) und weichballistische Abschnitte (5) aufweist, vorzugsweise zur Ausbildung eines mehrschichtigen Verbundmaterials und/oder dass das Schutzmaterial (1) mehrere weichballistische Abschnitte (5), gleich oder verschieden, aufweist.

5. Schutzoberbekleidung nach einem der vorhergehenden Ansprüche, **dadurch gekennzeichnet,**
**dass** das Schutzmaterial (1) außerdem mindestens einen Abdeckabschnitt (5), bevorzugt in Form eines textilen Flächenmaterials, aufweist und/oder dass das Schutzmaterial (1) zusätzlich zum hartballistischen Abschnitt (2) und dem gegebenenfalls vorhandenen weichballistischen Abschnitt (4) mindestens einen Abdeckabschnitt (5), bevorzugt in Form eines textilen Flächenmaterials, aufweist;
insbesondere wobei der Abdeckabschnitt (5) schichtartig, insbesondere mit zwei gegenüberliegenden Seiten, aufgebaut ist; und/oder
insbesondere wobei der Abdeckabschnitt (5) und der hartballistische Abschnitt (2) jeweils schichtartig, insbesondere jeweils mit zwei gegenüberliegenden Seiten, aufgebaut sind, insbesondere wobei der Abdeckabschnitt (5) im Schutzmaterial (1) derart angeordnet ist, dass im Gebrauchszustand (Verwendungszustand) und/oder Tragezustand der Abdeckabschnitt (5) keiner unmittelbaren Einwirkung ballistischer Wirkkörper ausgesetzt ist und/oder dass, vorzugsweise ausschließlich, der hartballistische Abschnitt (2) einer unmittelbaren Einwirkung ballistischer Wirkkörper ausgesetzt ist; und/oder
insbesondere wobei der hartballistische Abschnitt (2) und der Abdeckabschnitt (5) sowie der gegebenenfalls vorhandene weichballistische Abschnitt (4) ein Verbundmaterial ausbilden; und/oder
insbesondere wobei das Schutzmaterial (1) mehrere, vorzugsweise jeweils an den gegenüberliegenden Außenseiten des Schutzmaterials (1) angeordnete, Abdeckabschnitte (5), gleich oder verschieden, aufweist, vorzugsweise zur Ausbildung eines mehrschichtigen Verbundmaterials; und/oder
insbesondere wobei der Abdeckabschnitt (5) mit dem übrigen Schutzmaterial (1), insbesondere mit dem oder den an den Abdeckabschnitt (5) angrenzenden Abschnitten (2, 4), verbunden ist, insbesondere dauerhaft verbunden ist, vorzugsweise durch Verkleben, Verheften, Vernähen oder dergleichen; und/oder
insbesondere wobei der Abdeckabschnitt (5) feuerbeständig und/oder flammbeständig ausgebildet ist.

6. Schutzoberbekleidung nach einem der vorhergehenden Ansprüche, **dadurch gekennzeichnet,**
**dass** das Schutzmaterial (1) außerdem mindestens einen Adsorptionsabschnitt (6), insbesondere mit Schutzfunktion gegenüber chemischen oder biologischen Gift- oder Kampfstoffen, aufweist und/oder dass das Schutzmaterial (1) zusätzlich zum hartballistischen Abschnitt (2) und dem gegebenenfalls vorhandenen weichballistischen Abschnitt (4) sowie dem gegebenenfalls vorhandenen Abdeckabschnitt (5) mindestens einen Adsorptionsabschnitt (6), insbesondere mit Schutzfunktion gegenüber chemischen oder biologischen Gift- oder Kampfstoffen, aufweist;
insbesondere wobei der Adsorptionsabschnitt (6) schichtartig, insbesondere mit zwei gegenüberliegenden Seiten, aufgebaut ist; und/oder
insbesondere wobei der Adsorptionsabschnitt (6) und der hartballistische Abschnitt (2) jeweils schichtartig, insbesondere jeweils mit zwei gegenüberliegenden Seiten, aufgebaut sind, insbesondere wobei der Adsorptionsabschnitt (6) derart im Schutzmaterial (1) angeordnet ist, dass im Gebrauchszustand und/oder Tragezustand der Adsorptionsabschnitt (6) keiner unmittelbaren Einwirkung ballistischer Wirkkörper ausgesetzt ist und/oder dass der hartballistische Abschnitt (2) einer unmittelbaren Einwirkung ballistischer Wirkkörper ausgesetzt ist; und/oder
insbesondere wobei der Adsorptionsabschnitt (6) zusammen mit dem hartballistischen Abschnitt (2) und dem gegebenenfalls vorhandenen Abdeckabschnitt (5) sowie dem gegebenenfalls vorhandenen weichballistischen Abschnitt (4) ein Verbundmaterial ausbilden; und/oder
insbesondere wobei das Schutzmaterial (1) mehrere Adsorptionsabschnitte (6), gleich oder verschieden, aufweist, vorzugsweise zur Ausbildung eines mehrschichtigen Verbundmaterials; und/oder
insbesondere wobei der Adsorptionsabschnitt (6) mit dem übrigen Schutzmaterial (1), insbesondere mit dem oder den an den Adsorptionsabschnitt (6) angrenzenden Abschnitten (2, 4, 5), verbunden ist, insbesondere dauerhaft verbunden ist, vorzugsweise durch Verkleben, Verheften, Vernähen oder dergleichen; und/oder insbesondere wobei der Adsorptionsabschnitt (6) chemische oder biologische Gift- oder
Kampfstoffe adsorbierende Adsorbenspartikel, insbesondere auf Basis von Aktivkohle, vorzugsweise in Form von Aktivkohleteilchen, aufweist oder hieraus besteht; und/oder insbesondere wobei der Adsorptionsabschnitt (6) chemische oder biologische Gift- oder Kampfstoffe adsorbierende Adsorbenspartikel in Form diskreter Aktivkohleteilchen in Kornform oder Kugelform aufweist oder hieraus besteht.

7. Schutzoberbekleidung nach einem der vorhergehenden Ansprüche, **dadurch gekennzeichnet,**
**dass** der Gewichtsanteil der Formkörper (3), bezogen auf das Gesamtgewicht des Schutzmaterials (1), im Bereich von 15 Gew.-% bis 98 Gew.-%, vorzugsweise im Bereich von 25 Gew.-% bis 95 Gew.-%, besonders bevorzugt im Bereich von 30 Gew.-% bis 90 Gew.-%, liegt; und/oder
**dass** das Schutzmaterial (1) zumindest partiell verformbar und/oder biegbar und/oder dehnbar ausgebildet ist, insbesondere zumindest partiell elastisch und/oder reversibel verformbar und/oder biegbar und/oder dehnbar ausgebildet ist; und/oder
**dass** der hartballistische Abschnitt (2) und/oder das Schutzmaterial (1) einen Splitter- und/oder Ballistikschutzwert V₅₀, bestimmt nach STANAG 2920, von mindestens 200 m/s, vorzugsweise mindestens 225 m/s, bevorzugt mindestens 250 m/s, besonders bevorzugt mindestens 300 m/s, ganz besonders bevorzugt mindestens 500 m/s aufweist; und/oder
**dass** der weichballistische Abschnitt (4) einen Splitter- und/oder Ballistikschutzwert V₅₀, bestimmt nach STANAG 2920, im Bereich von 180 m/s bis 800 m/s, insbesondere 200 m/s bis 750 m/s, vorzugsweise 225 m/s bis 700 m/s, bevorzugt 250 m/s bis 650 m/s, besonders bevorzugt 275 m/s bis 600 m/s, ganz besonders bevorzugt 300 m/s bis 550 m/s, noch weiter bevorzugt 325 m/s bis 525 m/s, wiederrum weiter bevorzugt 350 m/s bis 525 m/s, aufweist; und/oder
**dass** das Schutzmaterial (1) und/oder der hartballistische Abschnitt (2) einen ballistischen Grenzwert V₅₀, bestimmt nach VPAM-KNB, von mindestens 500 m/s, insbesondere mindestens 600 m/s, vorzugsweise mindestens 700 m/s, bevorzugt mindestens 800 m/s, besonders bevorzugt mindestens 850 m/s, ganz besonders bevorzugt mindestens 900 m/s, aufweist und/oder dass das Schutzmaterial (1) und/oder der hartballistische Abschnitt (2) einen ballistischen Grenzwert V₅₀, bestimmt nach VPAM-KNB, im Bereich von 500 m/s bis 1.000 m/s, insbesondere 600 m/s bis 980 m/s, vorzugsweise 700 m/s bis 960 m/s, besonders bevorzugt 800 m/s bis 940 m/s, aufweist.

8. Ballistische Schutzbekleidungseinheit (10) mit Schutzfunktion gegenüber ballistischen Wirkkörpern mit Oberbekleidung und/oder Unterbekleidung sowie gegebenenfalls mit separatem Kopf- und/oder Gesichtsschutz, Halsschutz, Schulterschutz, Armschutz, Handschutz, Rumpfschutz, Torsoschutz, Genital- und/oder Analschutz und/oder Beinschutz,
wobei die Schutzbekleidungseinheit (10) voneinander verschiedene, im Tragezustand unterschiedlichen Körperbereichen zugeordnete und/oder im Tragezustand unterschiedliche Körperbereiche bedeckende Schutzmaterialien (1) aufweist,
wobei die Schutzmaterialien (1) jeweils mindestens einen der Beschussfläche (B) zugeordneten und/oder die Beschussfläche (B) ausbildenden, hartballistischen Abschnitt (2) mit Schutzfunktion gegenüber ballistischen Wirkkörpern aufweisen,
wobei der hartballistische Abschnitt (2) einen Splitter- und/oder Ballistikschutzwert V₅₀, bestimmt nach STANAG 2920, von mindestens 180 m/s aufweist,
wobei der hartballistische Abschnitt (2) eine Vielzahl von ballistischen und/oder beschusshemmenden, zumindest im Wesentlichen kugelförmigen Formkörpern (3) zum Absorbieren und/oder Ableiten und/oder Verteilen kinetischer Energie von ballistischen Wirkkörpern aufweist oder hieraus zumindest im Wesentlichen gebildet ist bzw. besteht,
wobei der Volumenanteil der Formkörper (3), bezogen auf das Gesamtvolumen des hartballistischen Abschnitts (2), im Bereich von 20 Vol.-% bis 99 Vol.-% liegt und/oder wobei der Gewichtsanteil der Formkörper (3), bezogen auf das Gesamtgewicht des hartballistischen Abschnitts (2), im Bereich von 20 Gew.-% bis 99 Gew.-% liegt,
wobei die Formkörper (3) und/oder das Material der Formkörper (3) jeweils eine Vickers-Härte von mindestens 1.200 HV, bestimmt gemäß DIN EN ISO 6507, aufweisen und
wobei die Formkörper (3) zur Ausbildung eines zusammenhängenden Gefüges in Form eines mehrschichtigen Verbundwerkstoffs mittels Sintern, Löten, Schweißen oder dergleichen und/oder mittels mindestens eines Bindemittels dauerhaft miteinander verbunden sind, wobei das Bindemittel ausgewählt ist aus der Gruppe von (i) anorganischen Bindemitteln; (ii) organischen Bindemitteln; (iii) Polymerwerkstoffen; (iv) Klebstoffen; sowie (v) Mischungen oder Kombinationen der vorgenannten Materialien und wobei das Bindemittel im ausgehärteten Zustand zumindest partiell verformbar ausgebildet ist.

## Claims

1. A ballistic protective outer garment (8), in particular in the form of a ballistic and/or bullet-inhibiting protective vest or jacket, comprising at least one ballistic protection material (1) having a protective function with respect to ballistic explosive bodies and having a fire surface (B),
wherein the protection material (1) comprises at least one hard ballistic section (2) which is associated with the fire surface (B) and/or forms the fire surface (B) and has a protective function with respect to ballistic explosive bodies,
wherein the hard ballistic section (2) has a splinter and/or ballistic protection level V₅₀, defined in accordance with STANAG 2920, of at least 180 m/s,
wherein the hard ballistic section (2) has a plurality of ballistic and/or bullet-inhibiting, at least substantially spherical, moulded bodies (3) for absorbing and/or deflecting and/or distributing kinetic energy from ballistic explosive bodies or is at least substantially formed or consists thereof,
wherein the percent by volume of the moulded bodies (3), in relation to the total volume of the hard ballistic section (2), is within the range of 20 vol% to 99 vol% and/or wherein the percent by weight of the moulded bodies (3), in relation to the total weight of the hard ballistic section (2), is within the range of 20 wt% to 99 wt%,
wherein the moulded bodies (3) and/or the material of the moulded bodies (3) has a Vickers hardness of at least 1,200 HV, determined according to DIN EN ISO 6507, and
wherein the moulded bodies (3) are permanently connected to one another to form a cohesive structure in the form of a multi-layered composite material by means of sintering, soldering, welding or the like and/or by means of at least one binding agent, wherein the binding agent is selected from the group of (i) inorganic binding agents; (ii) organic binding agents; (iii) polymeric materials; (iv) adhesives; and (v) mixtures or combinations of the aforementioned materials and wherein the binding agent is designed to be at least partially deformable in the cured state.

2. The protective outer garment according to claim 1, **characterised in that**
the hard ballistic section (2) is designed to be layered, preferably laminar, in particular having two opposing sides, in particular wherein the fire surface (B) is formed by a side, preferably the surface, of the hard ballistic section (2); and/or
that the moulded bodies (3) are arranged in particular within the hard ballistic section (2) to be at least substantially adjacent to each other and/or at least substantially in contact with each other; and/or
that the moulded bodies (3) are arranged within the hard ballistic section (2) such that the difference in volume between the total volume of the hard ballistic section (2) on the one hand and the total of the subvolumes occupied by each individual moulded body (3) on the other hand is at least substantially minimised, in particular is less than 50 vol%, preferably less than 40 vol%, more preferably less than 35 vol%, particularly preferably less than 30 vol% of the total volume of the hard ballistic section (2); and/or
that the percent by volume of the moulded bodies (3), in relation to the total volume of the hard ballistic section (2), is within the range of 30 vol% to 95 vol%, particularly preferably within the range of 40 vol% to 90 vol%, very particularly preferably in the range of 50 vol% to 85 vol%, even more preferably within the range of 60 vol% to 80 vol%; and/or
that the percent by weight of the moulded bodies (3), in relation to the total weight of the hard ballistic section (2), is within the range of 30 wt% to 98 wt%, particularly preferably within the range of 40 wt% to 97 wt%, very particularly preferably in the range of 50 wt% to 96 wt%, even more preferably within the range of 60 wt% to 95 wt%.

3. The protective outer garment according to claim 1 or 2, **characterised in that**
the moulded bodies (3) have at least substantially the same size, preferably at least substantially the same diameter; and/or
that the moulded bodies (3) have a size, in particular a diameter, within the range of 0.1 mm to 10 cm, preferably within the range of 0.5 mm to 5 cm, particularly preferably within the range of 1 mm to 4 cm, very particularly preferably within the range of 2 mm to 3 cm, even further preferably within the range of 5 mm to 2 cm; and/or
that the moulded bodies (3) are produced from a ballistically resistant hard material, in particular from a hard material which is resistant to ballistic explosive bodies and/or impenetrable and/or bullet-inhibiting, preferably selected from the group of (i) polymeric materials, preferably polyolefins, such as polyethylenes or polypropylenes, in particular impact-resistant and/or metal-reinforced or fibre-reinforced polymeric materials, particularly preferably polyolefins having an ultra-high molecular weight; (ii) metallic materials, in particular steel; (iii) ceramic materials; (iv) inorganic, in particular semi-metallic or metallic carbides, nitrides, silicides and oxides, in particular aluminium oxides, beryllium oxides, silicon oxides, silicon carbides, silicon nitrides, boron carbides and boron nitrides; and (v) mixtures or combinations of the aforementioned materials; and/or
that the moulded bodies (3) are produced from a ballistically resistant hard material, in particular from a hard material which is resistant to ballistic explosive bodies and/or impenetrable and/or bullet-inhibiting, preferably selected from the group of (i) metallic materials, in particular steel; (ii) ceramic materials; (iii) inorganic, particularly semi-metallic or metallic carbides, nitrides, silicides and oxides, in particular aluminium oxides, beryllium oxides, silicon oxides, silicon carbides, silicon nitrides, boron carbides and boron nitrides; and (iv) mixtures or combinations of the aforementioned materials; and/or
that the moulded bodies (3) are produced from a ballistically resistant material, preferably a hard material, in particular from a material, preferably a hard material, which is resistant to ballistic explosive bodies and/or impenetrable and/or bullet-inhibiting, in particular wherein the moulded bodies (3) are formed from solid material, in particular in the form of solid spheres, or else wherein the moulded bodies (3) are formed as hollow bodies, in particular in the form of hollow spheres, or else wherein the moulded bodies (3) are formed from wadded and/or agglomerated fibres or filaments or monofilaments, in particular textile fibres, preferably metallic or polymeric material fibres or filaments or monofilaments.

4. The protective outer garment according to one of the preceding claims, **characterised in that**
the protection material (1) has, in addition to the hard ballistic section (2), at least one soft ballistic section (4) and/or the protection material (1) additionally has at least one soft ballistic section (5);
in particular wherein the soft ballistic section (4) has a layered, preferably laminar, structure, in particular having two opposing sides; and/or
in particular wherein the soft ballistic section (4) is connected, in particular permanently connected, to the hard ballistic section (2), preferably by means of adhesion, stapling, sewing or the like; and/or
in particular wherein the soft ballistic section (4) is designed as a preferably textile fabric or as a preferably textile sheet material, in particular as a woven fabric, cloth, weft-knitted fabric, warp-knitted fabric, laid fabric or nonwoven fabric; and/or
in particular wherein the soft ballistic section (4) consists of polyparaphenylene terephthalamide fibres and/or polyethylene fibres and/or glass fibres; and/or
in particular wherein the soft ballistic section (4) has or consists of at least one polyolefin having an ultra-high molecular weight, in particular at least one polyethylene having an ultra-high molecular weight, in particular in the form of fibres and/or yarns; and/or
in particular wherein the soft ballistic section (4) is designed in the form of a film; and/or in particular wherein the hard ballistic section (2) and the soft ballistic section (4) form a composite material; and/or
in particular wherein the protection material (1) has a plurality of hard ballistic sections (2) and soft ballistic sections (5) which are preferably arranged alternately one after another, preferably to form a multi-layered composite material and/or the protection material (1) has a plurality of soft ballistic sections (5), being identical or different.

5. The protective outer garment according to one of the preceding claims, **characterised in that**
the protection material (1) additionally has at least one cover section (5), preferably in the form of a textile sheet material, and/or the protection material (1) has, in addition to the hard ballistic section (2) and the optional soft ballistic section (4), at least one cover section (5), preferably in the form of a textile sheet material;
in particular wherein the cover section (5) has a layered structure, in particular having two opposing sides; and/or
in particular wherein the cover section (5) and the hard ballistic section (2) each have a layered structure, in particular each having two opposing sides, in particular wherein the cover section (5) is arranged in the protection material (1) such that in the usage state (state of use) and/or worn state the cover section (5) is not exposed to any direct action of ballistic explosive bodies and/or, preferably exclusively, the hard ballistic section (2) is exposed to direct action of ballistic explosive bodies; and/or
in particular wherein the hard ballistic section (2) and the cover section (5) and the optional soft ballistic section (4) form a composite material; and/or
in particular wherein the protection material (1) has a plurality of cover sections (5) arranged in each case on the opposing outer sides of the protection material (1), being identical or different, preferably to form a multi-layered composite material; and/or
in particular wherein the cover section (5) is connected, in particular permanently connected, to the other protection material (1), in particular to the section(s) (2, 4) adjoining the cover section (5), preferably by means of adhesion, stapling, sewing or the like; and/or
in particular wherein the cover section (5) is designed to be fire-resistant and/or flame-resistant.

6. The protective outer garment according to one of the preceding claims, **characterised in that**
the protection material (1) additionally has at least one adsorption section (6), in particular having a protective function with respect to chemical or biological toxins or warfare agents and/or that the protection material (1) has, in addition to the hard ballistic section (2) and the optional soft ballistic section (4) and the optional cover section (5), at least one adsorption section (6), in particular having a protective function with respect to chemical or biological toxins or warfare agents;
in particular wherein the adsorption section (6) has a layered structure, in particular having two opposing sides; and/or
in particular wherein the adsorption section (6) and the hard ballistic section (2) each have a layered structure, in particular each having two opposing sides, in particular wherein the adsorption section (6) is arranged in the protection material (1) such that in the usage state and/or worn state the adsorption section (6) is not exposed to any direct action of ballistic explosive bodies and/or the hard ballistic section (2) is exposed to direct action of ballistic explosive bodies; and/or
in particular wherein the adsorption section (6) together with the hard ballistic section (2) and the optional cover section (5) and the optional soft ballistic section (4) form a composite material; and/or
in particular wherein the protection material (1) has a plurality of adsorption sections (6), being identical or different, preferably to form a multi-layered composite material; and/or
in particular wherein the adsorption section (6) is connected, in particular permanently connected, to the other protection material (1), in particular to the section(s) (2, 4, 5) adjoining the adsorption section (6), preferably by means of adhesion, stapling, sewing or the like; and/or
in particular wherein the adsorption section (6) has or consists of adsorbent particles, in particular based on activated carbon, preferably in the form of activated carbon particles, which adsorb chemical or biological toxins or warfare agents; and/or
in particular wherein the adsorption section (6) has or consists of adsorbent particles, adsorbing chemical or biological toxins or warfare agents, in the form of discrete activated carbon particles in a grain shape or spherical shape.

7. The protective outer garment according to one of the preceding claims, **characterised in that**
the percent by weight of the moulded bodies (3), in relation to the total weight of the protection material (1), is within the range of 15 wt% to 98 wt%, preferably within the range of 25 wt% to 95 wt%, particularly preferably in the range of 30 wt% to 90 wt%; and/or
the protection material (1) is designed to be at least partially deformable and/or bendable and/or stretchable, in particular at least partially elastically and/or reversibly deformable and/or bendable and/or stretchable; and/or
the hard ballistic section (2) and/or the protection material (1) have a splinter and/or ballistic protection level V₅₀, defined in accordance with STANAG 2920, of at least 200 m/s, preferably at least 225 m/s, more preferably at least 250 m/s, particularly preferably at least 300 m/s, very particularly preferably at least 500 m/s; and/or
the soft ballistic section (4) has a splinter and/or ballistic protection level V₅₀, defined in accordance with STANAG 2920, in the range of 180 m/s to 800 m/s, in particular 200 m/s to 750 m/s, preferably 225 m/s to 700 m/s, more preferably 250 m/s to 650 m/s, particularly preferably 275 m/s to 600 m/s, very particularly preferably 300 m/s to 550 m/s, even more preferably 325 m/s to 525 m/s, again more further preferably 350 m/s to 525 m/s; and/or
the protection material (1) and/or hard ballistic section (2) have a ballistic limit value V₅₀, defined in accordance with VPAM-KNB, of at least 500 m/s, in particular at least 600 m/s, preferably at least 700 m/s, more preferably at least 800 m/s, particularly preferably at least 850 m/s, very particularly preferably at least 900 m/s and/or the protection material (1) and/or the hard ballistic section (2) has a ballistic limit value V₅₀, defined in accordance with VPAM-KNB, within the range of 500 m/s to 1000 m/s, in particular 600 m/s to 980 m/s, preferably 700 m/s to 960 m/s, particularly preferably 800 m/s to 940 m/s.

8. A protective clothing unit (10) having a protective function with respect to ballistic explosive bodies, comprising an outer garment and/or undergarment and, optionally, comprising separate head and/or facial protection, neck protection, shoulder protection, arm protection, hand protection, trunk protection, torso protection, genital and/or anal protection and/or leg protection,
wherein the protective clothing unit (10) has mutually different protection materials (1) which are associated in the worn state with different body regions and/or in the worn state cover different body regions,
wherein the protection materials (1) each have at least one hard ballistic section (2) which is associated with the fire surface (B) and/or forms the fire surface (B) and has a protective function with respect to ballistic explosive bodies,
wherein the hard ballistic section (2) has a splinter and/or ballistic protection level V₅₀, defined in accordance with STANAG 2920, of at least 180 m/s,
wherein the hard ballistic section (2) has a plurality of ballistic and/or bullet-inhibiting, at least substantially spherical, moulded bodies (3) for absorbing and/or deflecting and/or distributing kinetic energy from ballistic explosive bodies or is at least substantially formed or consists thereof,
wherein the percent by volume of the moulded bodies (3), in relation to the total volume of the hard ballistic section (2), is within the range of 20 vol% to 99 vol% and/or wherein the percent by weight of the moulded bodies (3), in relation to the total weight of the hard ballistic section (2), is within the range of 20 wt% to 99 wt%,
wherein the moulded bodies (3) and/or the material of the moulded bodies (3) has a Vickers hardness of at least 1,200 HV, determined according to DIN EN ISO 6507, and
wherein the moulded bodies (3) are permanently connected to one another to form a cohesive structure in the form of a multi-layered composite material by means of sintering, soldering, welding or the like and/or by means of at least one binding agent, wherein the binding agent is selected from the group of (i) inorganic binding agents; (ii) organic binding agents; (iii) polymeric materials; (iv) adhesives; and (v) mixtures or combinations of the aforementioned materials and wherein the binding agent is designed to be at least partially deformable in the cured state.

## Revendications

1. Vêtement de dessus de protection balistique (8), en particulier sous forme d'une veste ou d'un gilet de protection balistique et/ou pare-balles, présentant au moins un matériau de protection balistique (1) ayant une fonction de protection contre des corps actifs balistiques et une surface de tir (B),
le matériau de protection (1) présentant au moins un segment balistique dur (2) correspondant à la surface de tir (B) et/ou formant la surface de tir (B), ayant une fonction de protection contre des corps actifs balistiques,
le segment balistique dur (2) présentant un niveau de protection contre les éclats et/ou un niveau de protection balistique V₅₀, déterminé selon STANAG 2920, d'au moins 180 m/s,
le segment balistique dur (2) présentant un certain nombre de corps moulés (3) balistiques et/ou pare-balles, au moins de forme essentiellement sphérique destinés à l'absorption, la dérivation et/ou la répartition de l'énergie cinétique de corps actifs balistiques ou est au moins essentiellement formé de ceux-ci ou consiste en ceux-ci,
la fraction volumique des corps moulés (3), par rapport au volume total du segment balistique dur (2), se situant dans l'intervalle allant de 20 % en volume à 99 % en volume et/ou la fraction pondérale des corps moulés (3), par rapport au poids total du segment balistique dur (2), se situe dans l'intervalle allant de 20 % en poids à 99 % en poids,
les corps moulés (3) et/ou le matériau du corps moulé (3) présentant chacun une dureté Vickers d'au moins 1200 HV, déterminée selon DIN EN ISO 6507, et
pour la formation d'une structure cohésive, les corps moulés (3) étant assemblés les uns aux autres de manière permanente pour former un matériau composite multicouche, par frittage, brasage, soudage ou similaire et/ou au moyen d'au moins un liant, le liant étant choisi parmi le groupe consistant en (i) les liants inorganiques ; (ii) les liants organiques ; (iii) les matériaux polymères ; (iv) les colles ; ainsi que (v) les mélanges ou combinaisons des matériaux ci-dessus, le liant étant au moins partiellement déformable à l'état durci.

2. Vêtement de dessus de protection selon la revendication 1, **caractérisé en ce que**
le segment balistique dur (2) est stratifié, de préférence étendu, en particulier avec deux faces opposées, en particulier la surface de tir (B) étant formée d'une face, de préférence d'une surface, du segment balistique dur (2) ; et/ou
les corps moulés (3), en particulier au sein du segment balistique dur (2), sont agencés de manière essentiellement attenante les uns aux autres et/ou au moins essentiellement en contact les uns avec les autres ; et/ou
les corps moulés (3) sont agencés au sein du segment balistique dur (2) de sorte que la différence de volume entre le volume total du segment balistique dur (2) d'une part et la somme des volumes partiels occupés par chaque corps moulé (3) individuel est au moins essentiellement minimisée, en particulier est inférieure à 50 % en volume, de préférence inférieure à 40 % en volume, avec avantage inférieure à 35 % en volume, de manière particulièrement préférée inférieure à 30 % en volume, du volume total du segment balistique dur (2) ; et/ou
la fraction volumique des corps moulés (3), par rapport au volume total du segment balistique dur (2), se situe dans l'intervalle allant de 30 % en volume à 95 % en volume, en particulier de 40 % en volume à 90 % en volume, de préférence de 50 % en volume à 85 % en volume, avec avantage de 60 % en volume à 80 % en volume ; et/ou
la fraction pondérale des corps moulés (3), par rapport au volume total du segment balistique dur (2), se situe dans l'intervalle allant de 30 % en poids à 98 % en poids, en particulier de 40 % en poids à 97 % en poids, de préférence de 50 % en poids à 96 % en poids, avec avantage de 60 % en poids à 95 % en poids.

3. Vêtement de dessus de protection selon la revendication 1 ou 2, **caractérisé en ce que**
les corps moulés (3) présentent au moins essentiellement la même grosseur, de préférence au moins essentiellement le même diamètre ; et/ou
les corps moulés (3) présentent une grosseur, en particulier un diamètre, située dans l'intervalle allant de 0,1 mm à 10 cm, en particulier dans l'intervalle allant de 0,5 mm à 5 cm, de préférence dans l'intervalle allant de 1 mm à 4 cm, avec avantage dans l'intervalle allant de 2 mm à 3 cm, de manière particulièrement préférée dans l'intervalle allant de 5 mm à 2 cm ; et/ou
les corps moulés (3) sont préparés à partir d'un matériau dur à résistance balistique, en particulier à partir d'un matériau dur résistant aux corps actifs balistiques et/ou non pénétrable et/ou à l'épreuve des balles, de préférence choisi parmi le groupe consistant en (i) les matériaux polymères, de préférence les polyoléfines, comme les polyéthylènes ou les polypropylènes, en particulier les matériaux polymères résistants au choc et/ou renforcés par un métal ou des fibres, de préférence les polyoléfines ayant un poids moléculaire ultra-élevé ; (ii) les matériaux métalliques, en particulier l'acier ; (iii) les matériaux céramiques ; (iv) les matériaux inorganiques, en particulier les carbures, nitrures, siliciures et oxydes de métalloïdes ou métalliques, en particulier les oxydes d'aluminium, les oxydes de béryllium, les oxydes de silicium, les carbures de silicium, les nitrures de silicium, les carbures de bore et les nitrures de bore, ainsi que (v) les mélanges ou combinaisons des matériaux ci-dessus ; et/ou
les corps moulés (3) sont préparés à partir d'un matériau dur à résistance balistique, en particulier à partir d'un matériau dur résistant aux corps actifs balistiques et/ou non pénétrable et/ou à l'épreuve des balles, de préférence choisi parmi le groupe consistant en (i) les matériaux métalliques, en particulier l'acier ; (ii) les matériaux céramiques ; (iii) les matériaux inorganiques, en particulier les carbures, nitrures, siliciures et oxydes de métalloïdes ou métalliques, en particulier les oxydes d'aluminium, les oxydes de béryllium, les oxydes de silicium, les carbures de silicium, les nitrures de silicium, les carbures de bore et les nitrures de bore, ainsi que (iv) les mélanges ou combinaisons des matériaux ci-dessus ; et/ou
les corps moulés (3) sont préparés à partir d'un matériau à résistance balistique, de préférence un matériau dur, en particulier à partir d'un matériau résistant aux corps actifs balistiques et/ou non pénétrable et/ou à l'épreuve des balles, de préférence un matériau dur, en particulier les corps moulés (3) étant formés d'un matériau plein, en particulier sous forme de sphères pleines ou les corps moulés (3) étant creux, en particulier sous forme de sphères creuses ou les corps moulés (3) étant formés à partir de fils, de filaments ou de monofilaments enchevêtrés et/ou agglomérés, en particulier des fils textiles, de préférence des fils, filaments ou monofilaments métalliques ou polymères.

4. Vêtement de dessus de protection selon l'une des revendications précédentes, **caractérisé en ce que**
le matériau de protection (1) présente en plus du segment balistique dur (2), au moins un segment balistique souple (4) et/ou **en ce que** le matériau de protection (1) présente en outre au moins un segment balistique souple (5) ;
en particulier le segment balistique souple (4) étant élaboré de manière stratifiée, de préférence étendue, en particulier avec deux faces opposées ; et/ou
en particulier le segment balistique souple (4) étant assemblé au segment balistique dur (2), en particulier étant assemblé de manière permanente, de préférence par collage, agrafage, couture ou similaire ; et/ou
en particulier le segment balistique souple (4) étant élaboré sous forme d'une étoffe textile ou d'un matériau plan de préférence textile, en particulier sous forme d'un tissu, tissu à mailles, tricot, nappe, voile ou non-tissé et/ou
en particulier le segment balistique souple (4) consistant en des fibres de poly(téréphtalamide de paraphénylène) et/ou des fibres de polyéthylène et/ou des fibres de verre ; et/ou
en particulier le segment balistique souple (4) présentant au moins une polyoléfine à poids moléculaire ultra-élevé, en particulier au moins un polyéthylène à poids moléculaire ultra-élevé, en particulier sous forme de fibres et/ou de fils, ou en étant constitué ; et/ou
en particulier le segment balistique souple (4) ayant la forme d'une feuille ; et/ou en particulier le segment balistique dur (2) et le segment balistique souple (4) formant un matériau composite ; et/ou
en particulier le matériau de protection (1) présentant plusieurs segments balistiques durs (2) et segments balistiques souples (5), de préférence agencés alternativement et/ou **en ce que** le matériau de protection (1) présente plusieurs segments balistiques souples (5), identiques ou différents.

5. Vêtement de dessus de protection selon l'une des revendications précédentes, **caractérisé en ce que**
le matériau de protection (1) présente en outre, au moins un segment de couverture (5), de préférence sous forme d'un matériau textile plan et/ou **en ce que** le matériau de protection (1) présente en plus du segment balistique dur (2) et du segment balistique souple (4) le cas échéant présent, au moins un segment de couverture (5), de préférence sous forme d'un matériau étendu textile ;
en particulier le segment de couverture (5) étant élaboré de manière stratifiée, en particulier avec deux faces opposées ; et/ou
en particulier le segment de couverture (5) et le segment balistique dur (2) étant élaborés chacun, de manière stratifiée, en particulier avec deux faces opposées, en particulier le segment de couverture (5) étant agencé dans le matériau de protection (1) de sorte que à l'état utilisé et/ou porté, le segment de couverture (5) ne soit exposé à aucune action directe des corps actifs balistiques et/ou **en ce que** le segment balistique dur (2) soit exposé, de préférence exclusivement, à une action directe des corps actifs balistiques ; et/ou
en particulier le segment balistique dur (2) et le segment de couverture (5), ainsi que le segment balistique souple (4) le cas échéant présent, formant un matériau composite ; et/ou
en particulier le matériau de protection (1) présentant plusieurs segments de couverture (5), identiques ou différents, de préférence agencés sur les faces extérieures opposées du matériau de protection (1), de préférence pour former un matériau composite multicouche ; et/ou
en particulier le segment de couverture (5) étant assemblé au matériau de protection (1) restant, en particulier au(x) segment(s) (2,4) attenants au segment de couverture (5), en particulier étant assemblé de manière permanente, de préférence par collage, agrafage, couture ou similaire ; et/ou
en particulier où le segment de couverture (5) est ignifuge et/ou résistant aux flammes.

6. Vêtement de dessus de protection selon l'une des revendications précédentes, **caractérisé en ce que**
le matériau de protection (1) présente en outre, un segment d'adsorption (6), en particulier ayant une fonction de protection contre les substances toxiques et de guerre chimiques et biologiques et/ou **en ce que** le matériau de protection (1) présente en plus du segment balistique dur (2) et du segment balistique souple (4) le cas échéant présent, ainsi que du segment de couverture (5) le cas échéant présent, au moins un segment d'adsorption (6), en particulier ayant une fonction de protection contre les substances toxiques et de guerre chimiques et biologiques;
en particulier le segment d'adsorption (6) étant élaboré de manière stratifiée, en particulier avec deux faces opposées ; et/ou
en particulier le segment d'adsorption (6) et le segment balistique dur (2) étant élaborés chacun de manière stratifiée, en particulier avec deux faces opposées, en particulier où le segment d'adsorption (6) est agencé dans le matériau de protection (1) de sorte que à l'état utilisé et/ou porté, le segment d'adsorption (6) ne soit exposé à aucune action directe des corps actifs balistiques et/ou **en ce que** le segment balistique dur (2) soit exposé à une action directe des corps actifs balistiques ; et/ou
en particulier où le segment d'adsorption (6) en association avec le segment balistique dur (2) et le segment de couverture (5) le cas échéant présent, ainsi que le segment balistique souple (4) le cas échéant présent, formant un matériau composite ; et/ou
en particulier le matériau de protection (1) présentant plusieurs segments d'adsorption (6), identiques ou différents, de préférence pour former un matériau composite multicouche ; et/ou
en particulier le segment d'adsorption (6) étant relié au matériau de protection (1) restant, en particulier au(x) segment(s) (2, 4, 5) attenants au segment d'adsorption (6), en particulier est relié de manière permanente, de préférence par collage, agrafage, couture ou similaire ; et/ou
en particulier le segment d'adsorption (6) présentant des particules adsorbant les substances toxiques et de guerre chimiques et biologiques, en particulier à base de charbon actif, de préférence sous forme de particules de charbon actif, ou en étant constitué ; et/ou
en particulier le segment d'adsorption (6) présentant des particules adsorbant les substances toxiques et de guerre chimiques et biologiques, sous forme de particules discrètes de charbon actif en grains ou en sphères, ou en étant constitué.

7. Vêtement de dessus de protection selon l'une des revendications précédentes, **caractérisé en ce que**
la fraction pondérale des corps moulés (3), par rapport au volume total du matériau de protection (1), se situe dans l'intervalle allant de 15 % en poids à 98 % en poids, en particulier de 25 % en poids à 95 % en poids, de préférence de 30 % en poids à 90 % en poids ; et/ou
le matériau de protection (1) est au moins partiellement déformable et/ou flexible et/ou extensible, en particulier au moins partiellement élastique et/ou déformable et/ou flexible et/ou extensible de manière réversible ; et/ou
le segment balistique dur (2) et/ou le matériau de protection (1) présentent un niveau de protection contre les éclats et/ou un niveau de protection balistique V₅₀, déterminé selon STANAG 2920, d'au moins 200 m/s, en particulier d'au moins 225 m/s, de préférence d'au moins 250 m/s, avec avantage d'au moins 300 m/s, d'une manière particulièrement préférée d'au moins 500 m/s ; et/ou
le segment balistique souple (4) présente un niveau de protection contre les éclats et/ou un niveau de protection balistique V₅₀, déterminé selon STANAG 2920, situé dans l'intervalle allant de 180 m/s à 800 m/s, en particulier de 200 m/s à 750 m/s, de préférence de 225 m/s à 700 m/s, avec avantage de 250 m/s à 650 m/s, d'une manière particulièrement préférée de 275 m/s à 600 m/s, d'une manière tout particulièrement préférée de 300 m/s à 550 m/s, d'une manière encore plus préférée de 325 m/s à 525 m/s, d'une manière de nouveau plus préférée de 350 m/s à 525 m/s ; et/ou
le matériau de protection (1) et/ou le segment balistique dur (2) présentent un niveau de protection balistique V₅₀, déterminé selon VPAM-KNB, d'au moins 500 m/s, en particulier d'au moins 600 m/s, de préférence d'au moins 700 m/s, avec avantage d'au moins 800 m/s, d'une manière particulièrement préférée d'au moins 850 m/s, d'une manière tout particulièrement préférée d'au moins 900 m/s, et/ou **en ce que** le matériau de protection (1) et/ou le segment balistique dur (2) présentent une limite balistique V₅₀, déterminée selon VPAM-KNB, situé dans l'intervalle allant de 500 m/s à 1000 m/s, en particulier de 600 m/s à 980 m/s, de préférence de 700 m/s à 960 m/s, avec avantage de 800 m/s à 940 m/s.

8. Article vestimentaire de protection balistique (10) ayant une fonction de protection contre les corps actifs balistiques avec vêtement de dessus et/ou sous-vêtement ainsi que le cas échéant avec protection distincte de la tête et/ou du visage, protection du cou, protection des épaules, protection des bras, protection des mains, protection du tronc, protection du torse, protection génitale et/ou anale et/ou protection des jambes,
l'article vestimentaire de protection (10) présentant différents matériaux de protection (1) destinés à différentes zones du corps à l'état porté et/ou couvrant différentes zones du corps à l'état porté,
les matériaux de protection (1) présentant chacun au moins un segment balistique dur (2) correspondant à la surface de tir (B) et/ou formant la surface de tir (B), ayant une fonction de protection contre des corps actifs balistiques,
le segment balistique dur (2) présentant un niveau de protection contre les éclats et/ou un niveau de protection balistique V₅₀, déterminé selon STANAG 2920, d'au moins 180 m/s,
le segment balistique dur (2) présentant un certain nombre de corps moulés (3) balistiques et/ou pare-balles, au moins de forme essentiellement sphérique destinés à l'absorption, la dérivation et/ou la répartition de l'énergie cinétique de corps actifs balistiques ou est au moins essentiellement formé de ceux-ci ou consiste en ceux-ci,
la fraction volumique des corps moulés (3), par rapport au volume total du segment balistique dur (2), se situant dans l'intervalle allant de 20 % en volume à 99 % en volume et/ou la fraction pondérale des corps moulés (3), par rapport au poids total du segment balistique dur (2), se situant dans l'intervalle allant de 20 % en poids à 99 % en poids,
les corps moulés (3) et/ou le matériau du corps moulé (3) présentant chacun une dureté Vickers d'au moins 1200 HV, déterminée selon DIN EN ISO 6507, et
où pour la formation d'une structure cohésive, les corps moulés (3) sont reliés les uns aux autres de manière permanente pour former un matériau composite multicouche, par frittage, brasage, soudage ou similaire et/ou au moyen d'au moins un liant, le liant étant choisi parmi le groupe consistant en (i) les liants inorganiques ; (ii) les liants organiques ; (iii) les matériaux polymères ; (iv) les colles ; ainsi que (v) les mélanges ou combinaisons des matériaux ci-dessus, le liant étant au moins partiellement déformable à l'état durci.
